# EUROPEAN PATENT APPLICATION

(11) **EP 4 671 995 A1**
(43) Date of publication of application: **31.12.2025**
(21) Application number: 24760313.7
(22) Date of filing: 19.02.2024
(51) Int. Cl.: G06F 11/16

(54) **VERIFICATION SYSTEM AND VERIFICATION METHOD FOR BYZANTINE FAILURE DETECTION**

(30) Priority: 20.02.2023 JP 2023024149
(71) Applicant: Scalar, Inc, Shinjuku-ku Tokyo 162-0828 (JP)
(72) Inventor: NEMOTO, Jun, Tokyo 162-0828 (JP); YAMADA, Hiroyuki, Tokyo 162-0828 (JP)
(74) Representative: LeoBlu Patentanwälte Rolinec Winter PartG mbB
(86) International application number: PCT/JP2024/005805
(87) International publication number: WO 2024/177014

(57) **Abstract**

After a transaction is executed in a first computer system, a validation system performs validation related to the transaction. Specifically, the validation system stores transaction management data for each transaction executed in the first computer system in a second computer system. When the transaction is executed in response to a transaction request, the first computer system returns a result including a proof related to the execution of the transaction. For each transaction, the transaction management data includes data held by the transaction request and data acquired from the result of the transaction and having the proof of the transaction. The validation system specifies the transaction management data of validation target transaction from the second computer system and performs validation on the basis of the specified transaction management data.

## Description

### Technical Field

The present invention generally relates to validation for Byzantine fault detection.

### Background Art

Recently, irrespective of inside or outside of this country, dishonest inspection or falsification of inspection data are rampant, which has become a social problem in the manufacturing sector, in particular. In addition, a cyber attack to businesses and government and municipal offices have increased. In order to deal with such malicious attacks, a Byzantine Fault Tolerance (BFT) technique and a Byzantine Fault Detection (BFD) technique are widely studied.

The Byzantine Fault Tolerance technique is applied also to a database system, which makes execution of transaction processing, while inseparability, consistency, independency are kept. In order to shield Byzantine faults by these techniques, a plurality of database replicas are needed. If the number of the fault replicas allowed is assumed to be f, at least 3f + 1 replicas are needed. Since malicious attacks can spread to the replicas in the same management domain in general, these plurality of replicas have to be managed in separate management domains, respectively. Tehrefore, in order to shield Byzantine faults, database systems often operated in a single organization have to be operated in at least four organizations with different management authorities, which forces a large burden on the management. Here, the "management domain" refers to a set of nodes or networks operated under a single organization or management authority.

The Byzantine fault detection technique is one of approaches which deal with malicious attacks while such burdens are reduced. These detection techniques perform only detection of a Byzantine fault, hence the operation thereof cannot be continued as tolerance techniques, but they can be used only if there are f + 1 replicas with respect to the number of fault replicas f. That is, in at least two management domains, the Byzantine fault can be detected. For example, as the Byzantine fault detection technique, such an art as disclosed in PTL 1 is known, which detects a Byzantine fault synchronously by using two database replicas held by two components called Ledger and Auditor.

### Citation List

### Patent Literature

PTL 1: Japanese Patent No. 7152828

### Summary of Invention

### Technical Problem

However, if periodic synchronic processing (consensus formation) between a first computer system (Ledger, for example) and a validation system (Auditor, for example) is needed in executing a transaction, latency is large, and transaction throughput lowers.

### Solution to Problem

After the transaction is executed in the first computer system, the validation system executes validation on the transaction.

Specifically, transaction management data for each transaction executed in the first computer system is stored, by the validation system, in a second computer system. The first computer system is configured to return a transaction result, when a transaction is executed in response to a transaction request, and the transaction result includes a proof related to the execution of the transaction. At each transaction, the transaction management data includes data held by the transaction request of the transaction and also includes data acquired from the transaction result of the transaction and having a proof of the transaction. The validation system specifies transaction management data of a validation target transaction from the second computer system in response to the validation request and executes validation on the basis of the specified transaction management data. Advantageous Effects of Invention

The latency is improved, and the transaction throughput is raised.

### Brief Description of Drawings

[Fig. 1]

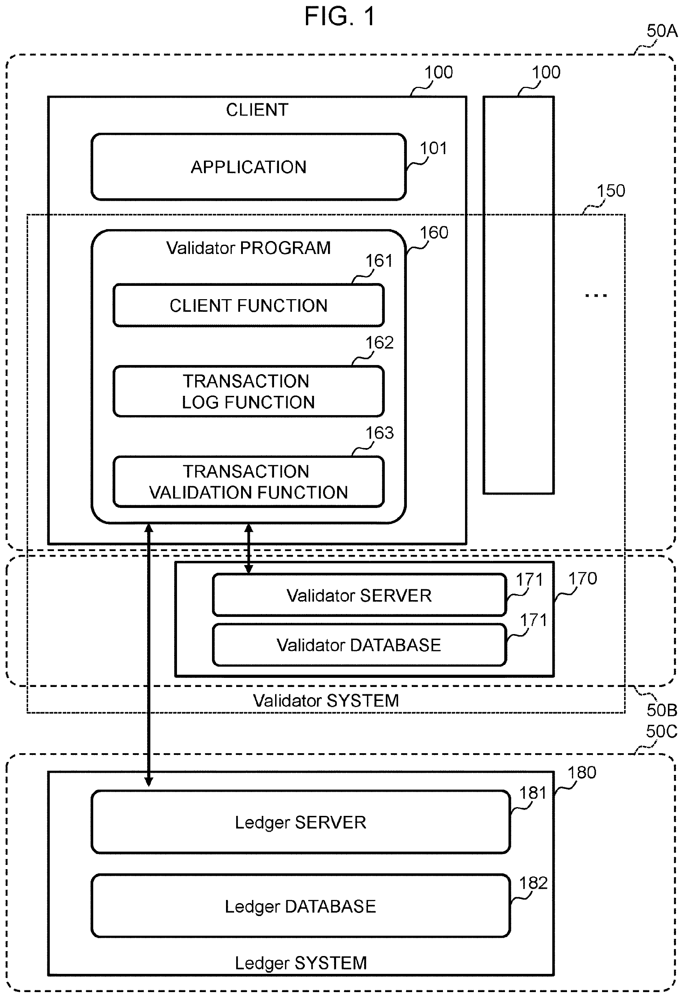

   Fig. 1 shows a configuration example of an entire system including a Validator system according to a Second Embodiment.
[Fig. 2]

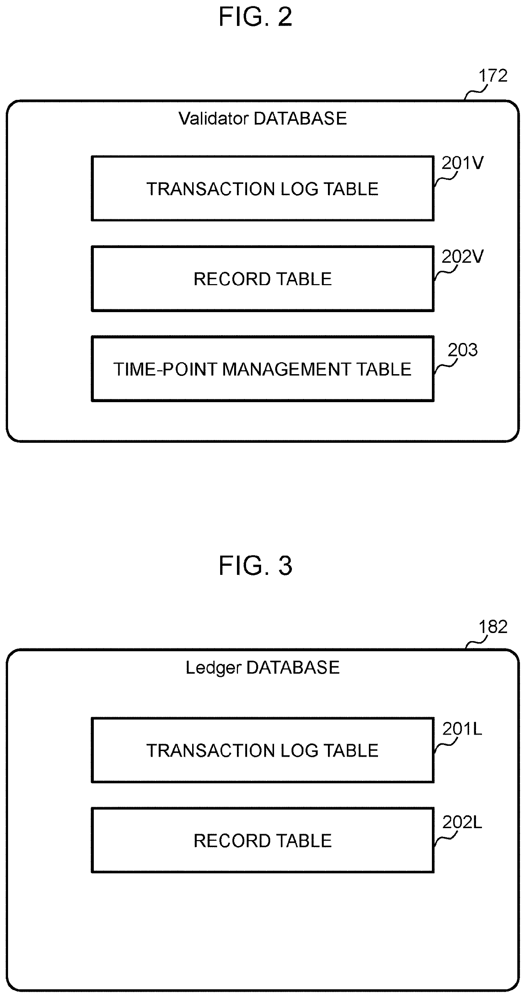

   Fig. 2 shows a configuration example of a Validator database.
[Fig. 3]
   Fig. 3 shows a configuration example of a Ledger database.
[Fig. 4]

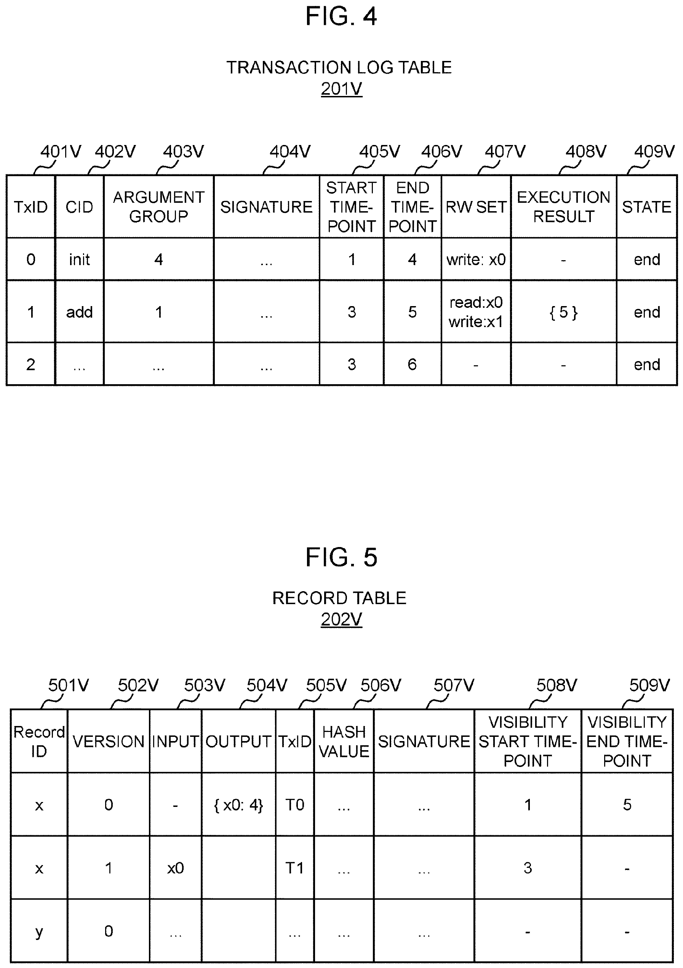

   Fig. 4 shows a configuration example of a transaction log table of the Validator database.
[Fig. 5]
   Fig. 5 shows a configuration example of a record table of the Validator database.
[Fig. 6]

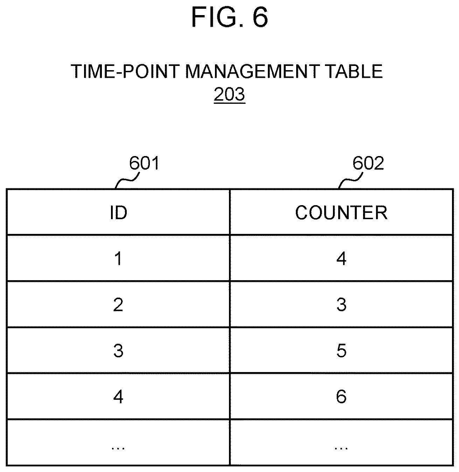

   Fig. 6 shows a configuration example of a time-point management table of the Validator database.
[Fig. 7]

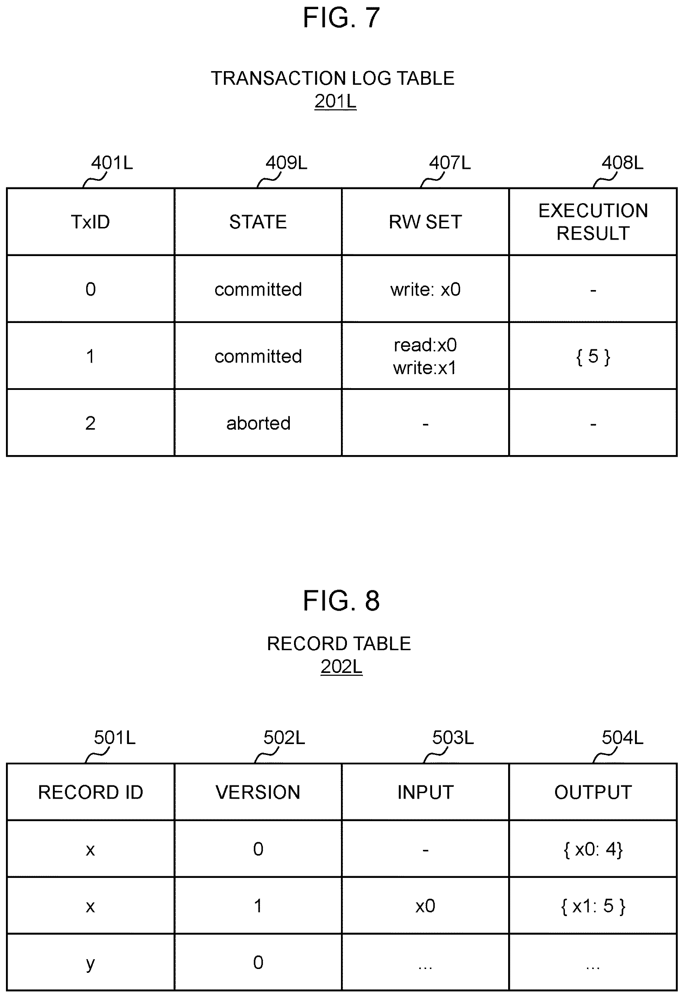

   Fig. 7 shows a configuration example of a transaction log table of the Ledger database.
[Fig. 8]
   Fig. 8 shows a configuration example of a record table of the Ledger database.
[Fig. 9]

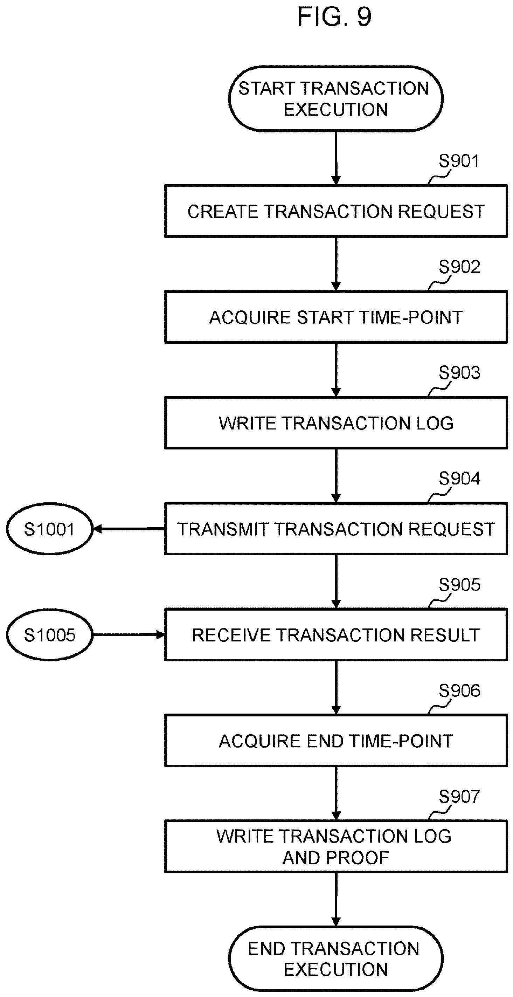

   Fig. 9 shows an example of a processing flow related to a Validator program in processing flows related to the transaction execution.
[Fig. 10]

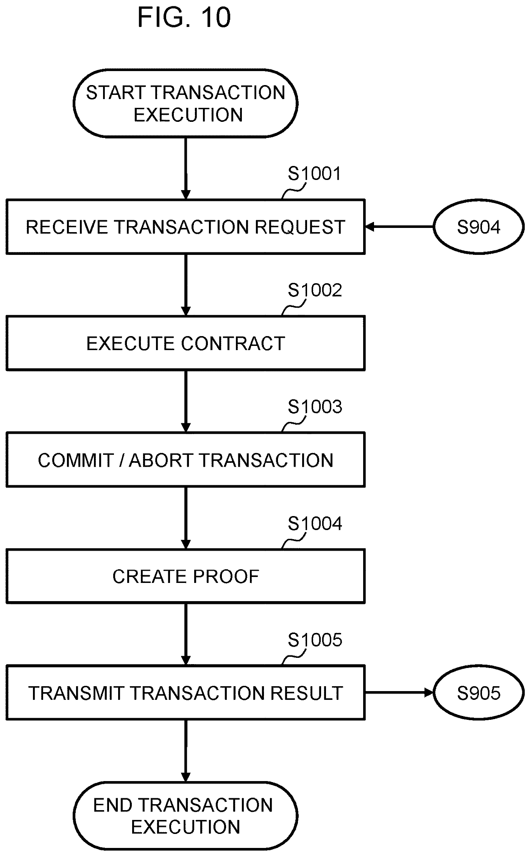

   Fig. 10 shows an example of a processing flow related to a Ledger server in the processing flows related to the transaction execution.
[Fig. 11]

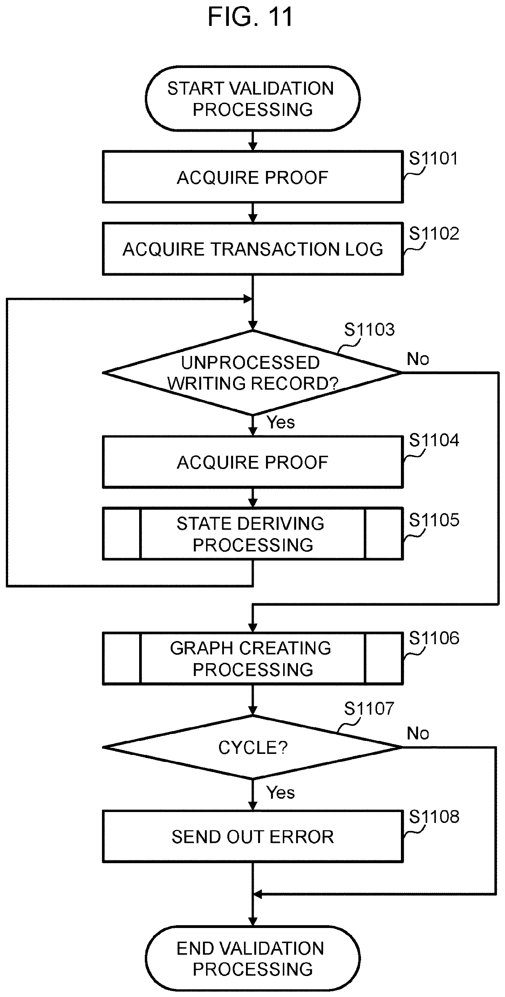

   Fig. 11 shows an example of a processing flow of validation processing.
[Fig. 12]

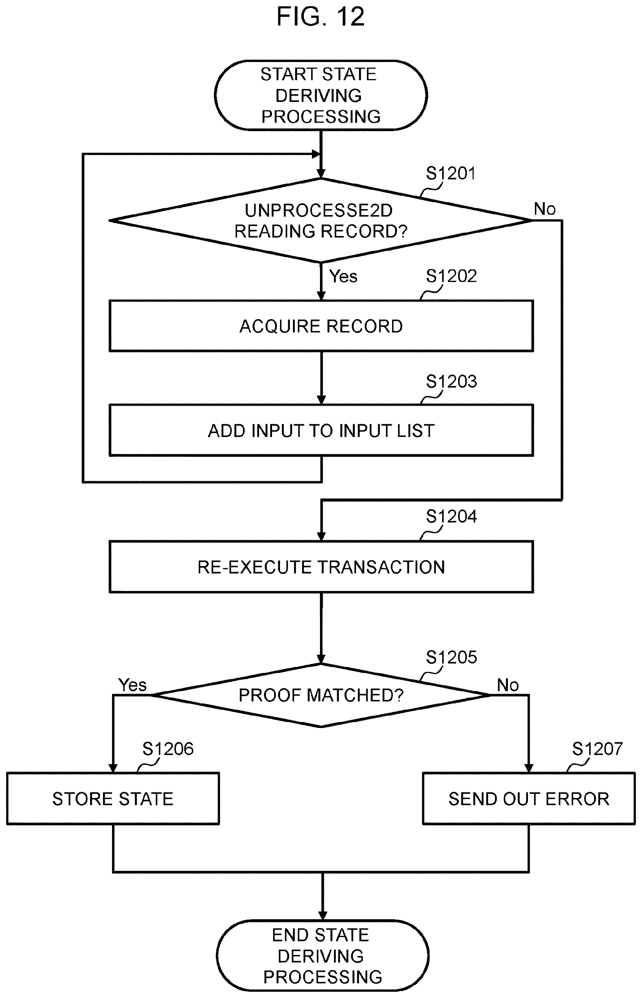

   Fig. 12 shows an example of a processing flow of state deriving processing.
[Fig. 13]

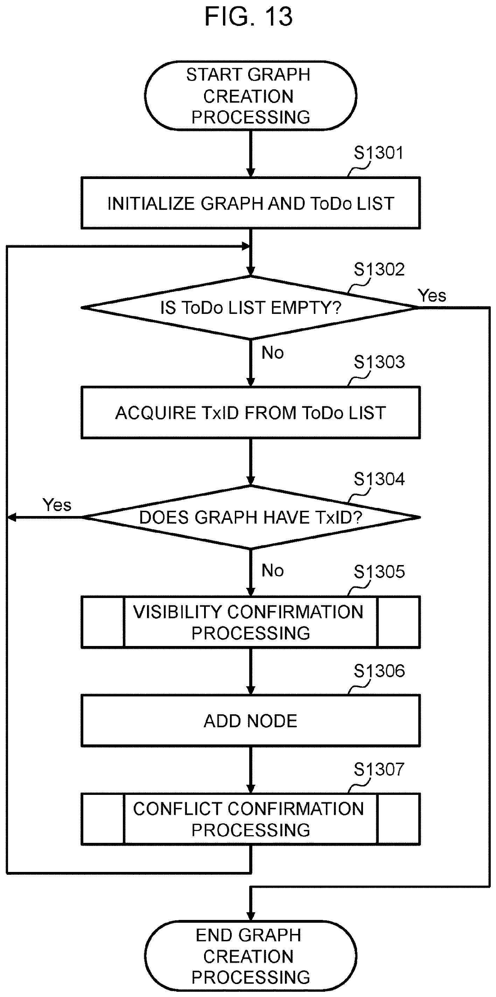

   Fig. 13 shows an example of a processing flow of graph creation processing.
[Fig. 14]

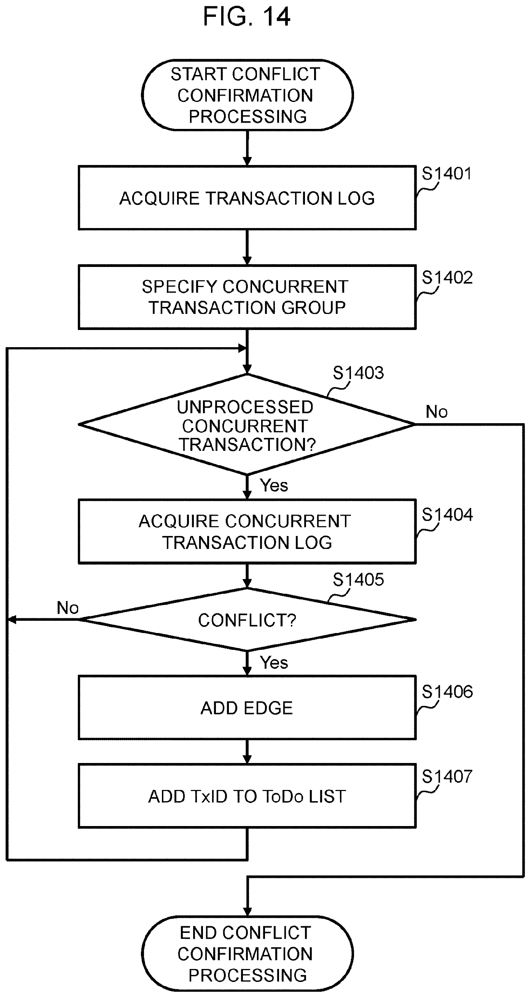

   Fig. 14 shows an example of a processing flow of conflict confirmation processing.
[Fig. 15]

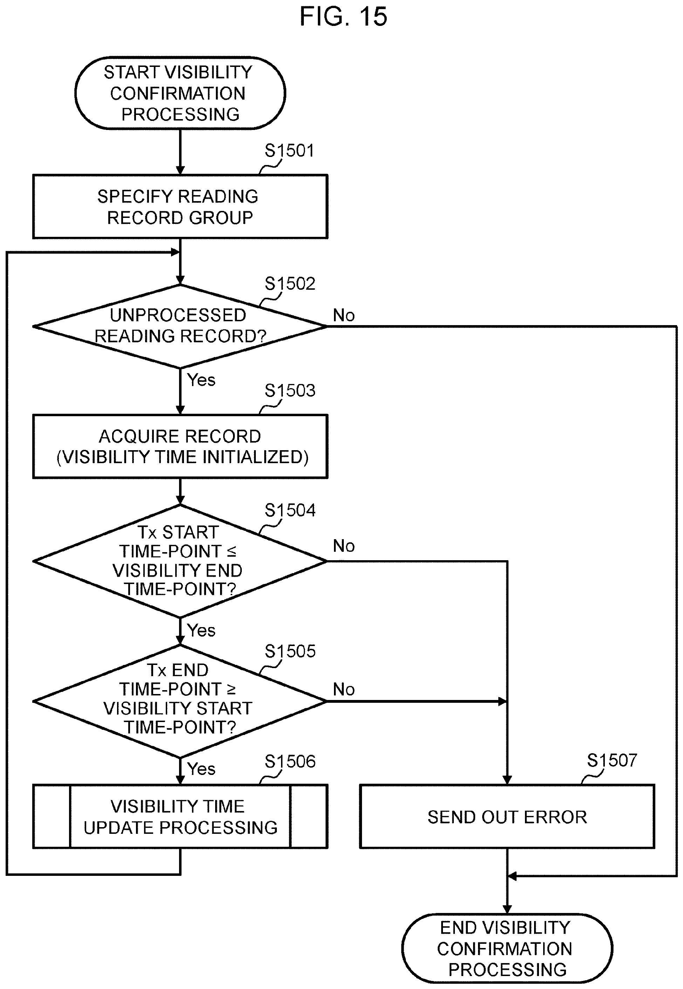

   Fig. 15 shows an example of a processing flow of visibility confirmation processing.
[Fig. 16]

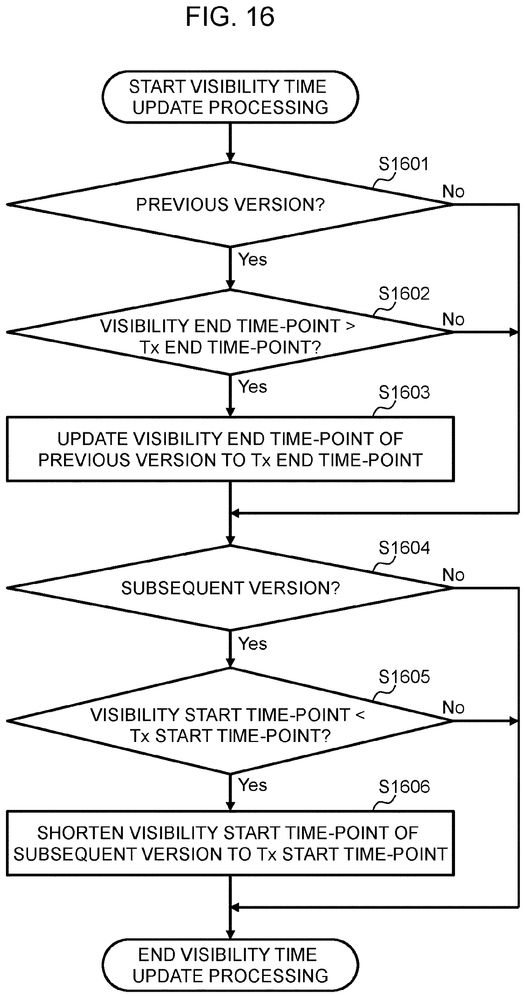

   Fig. 16 shows an example of a processing flow of visibility time update processing.
[Fig. 17]

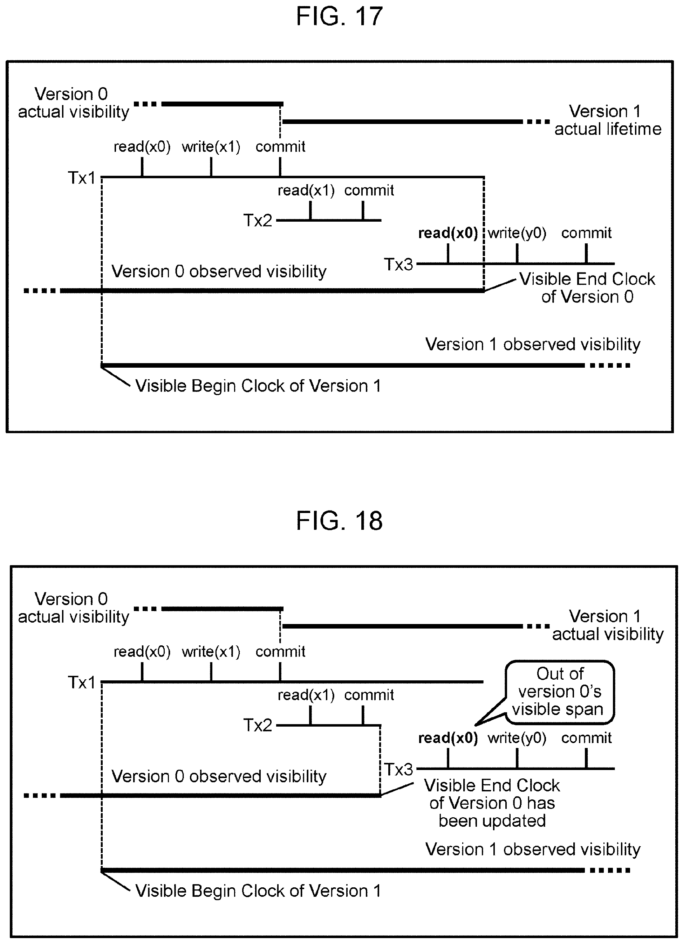

   Fig. 17 shows an example of a visibility end time-point of a version "0" and a visibility start time-point of a version "1"**.**
[Fig. 18]
   Fig. 18 shows an example of update of the visibility end time-point of the version "0".
[Fig. 19]

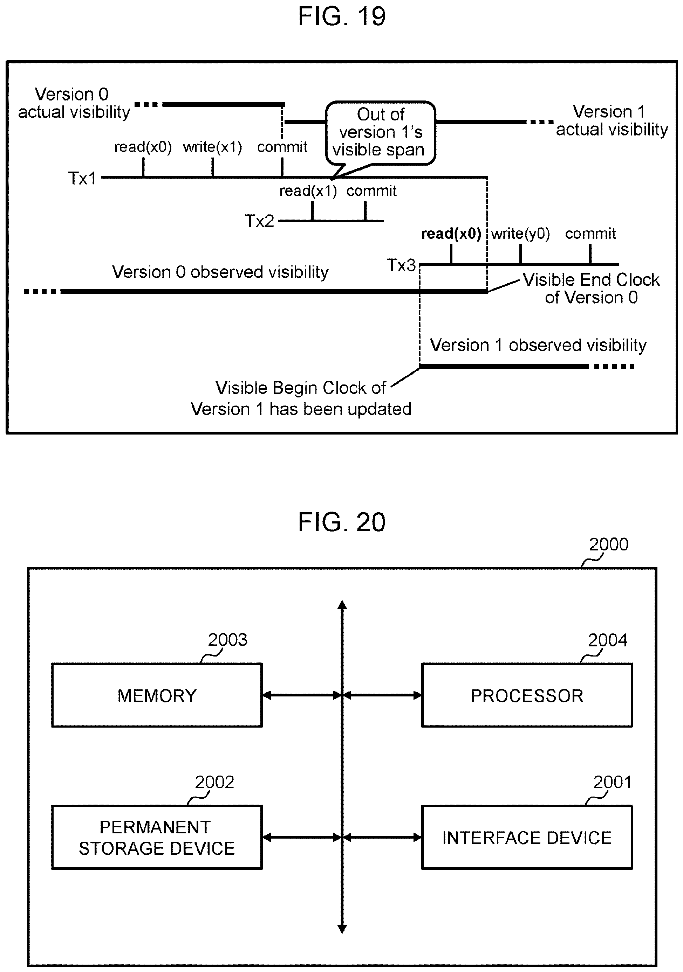

   Fig. 19 shows an example of update of the visibility start time-point of the version "1".
[Fig. 20]
   Fig. 20 shows a configuration example of a computer system.
[Fig. 21]

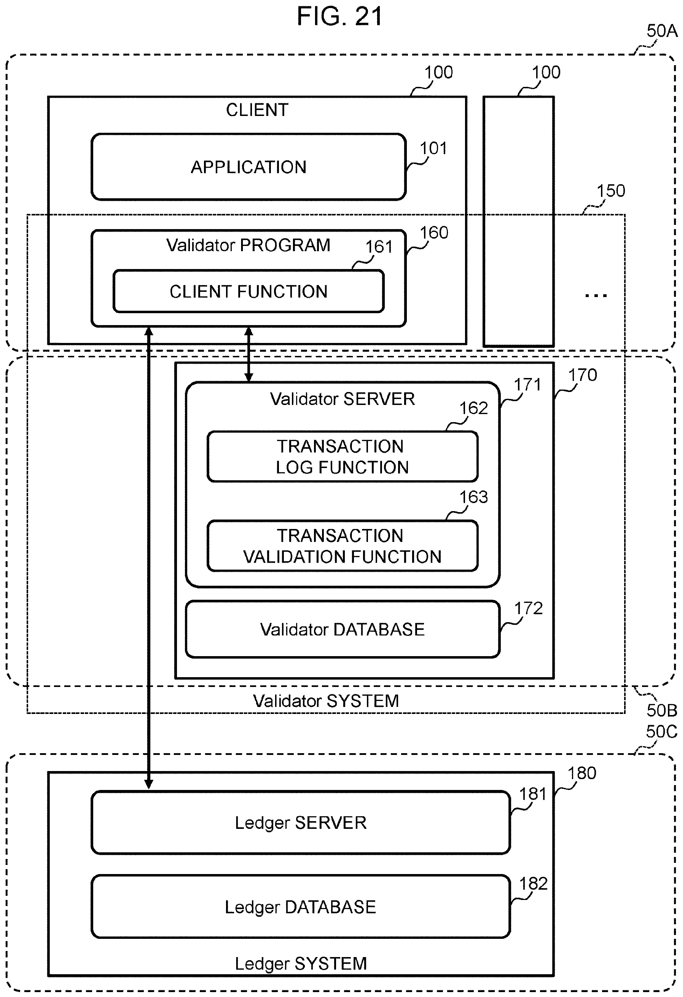

   Fig. 21 shows a configuration example of an entire system including a Validator system according to a Third Embodiment.
[Fig. 22]

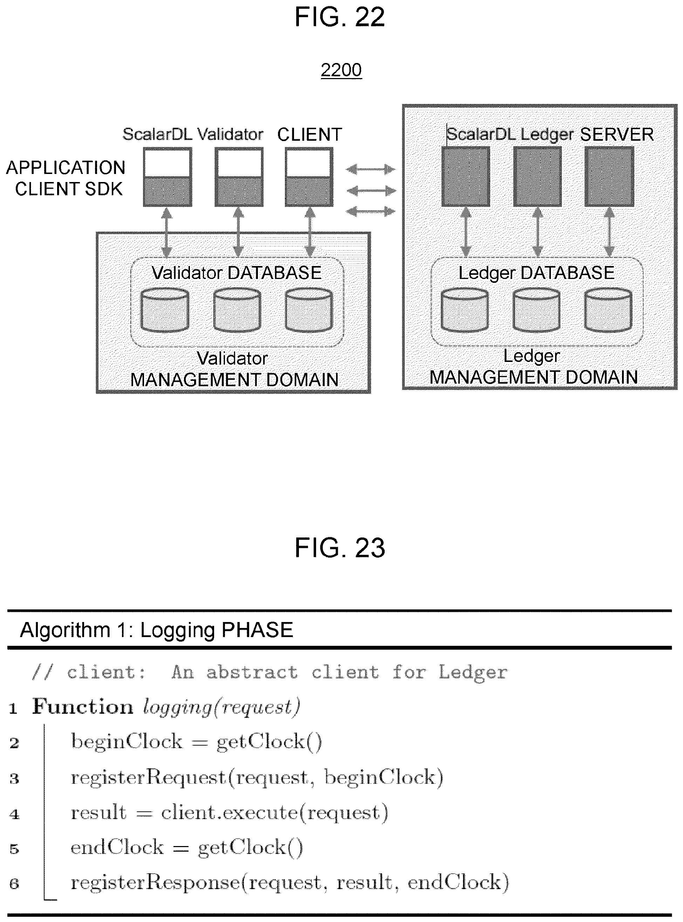

   Fig. 22 shows a configuration example of an entire system including a Validator system according to a First Embodiment.
[Fig. 23]
   Fig. 23 shows Algorithm 1 (processing flow of Logging phase).
[Fig. 24]

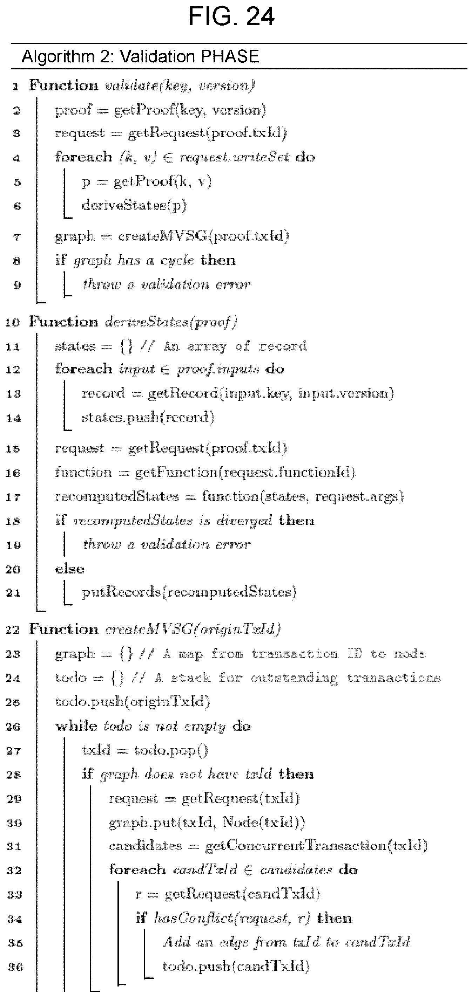

   Fig. 24 shows Algorithm 2 (processing flow of Validation phase).

### Description of Embodiments

In the following description, an "interface apparatus" includes one or more interfaces. The one or more interfaces may be one or more communication interface devices of a same kind (for example, one or more NIC (Network Interface Cards)) or two or more communication interface devices of different kinds (for example, an NIC and an HBA (Host Bus Adapter)).

In addition, in the following description, a "storage apparatus" includes one or more memories. With respect to the storage apparatus, at least one memory may be a volatile memory. The storage apparatus is mainly used in processing by a processor. The storage apparatus may include one or more non-volatile storage apparatuses (for example, an HDD (Hard Disk Drive) or an SSD (Solid State Drive)) other than the memories.

In addition, in the following description, a "processor" includes one or more processors. At least one processor is typically a microprocessor such as a CPU (Central Processing Unit). Each of the one or more processors may be single-core or multi-core. The processor may include a hardware circuit which performs a part of or the whole of processing.

In addition, in the following description, while processing may be described using a "program" as a subject in some cases, since the program executes prescribed processing using the storage apparatus (for example, a memory) and / or an interface apparatus (for example, a communication port) and the like as appropriate by being executed by the processor, the processor may be considered a subject of the processing. Processing described using the program as a subject may be considered to be processing executed by the processor or by an apparatus having the processor. In addition, the processor may include a hardware circuit (for example, an FPGA (Field-Programmable Gate Array) or an ASIC (Application Specific Integrated Circuit)) which executes a part of or the whole of the processing. The program may be installed onto an apparatus such as a computer from a program source. For example, the program source may be a program distribution server or a computer-readable recording medium (for example, a non-transitory recording medium). In addition, in the following description, two or more programs may be realized as one program or one program may be realized as two or more programs.

In addition, in the following description, processing is described using the "program" as a subject, but since the program executes predetermined processing by using the storage apparatus and / or the interface apparatus and the like as appropriate by being executed by the processor, the subject of the processing may be the processor (or a device such as a controller having the processor). The program may be installed onto an apparatus such as a computer from a program source. The program source may be, for example, a program distribution server or a computer-readable (for example, a non-transitory) recording medium. In addition, in the following description, two or more programs may be realized as one program or one program may be realized as two or more programs. In addition, a function realized by execution of an "xxx program" may be called an "xxx unit".

In addition, in the following description, common signs among reference signs may be used when describing elements of a same kind without distinction but reference signs may be used when distinguishing elements of a same kind from one another in some cases.

In addition, in the following explanation, a "record" or an "entry" refers to a block of logical electronic data (an object, for example) as viewed from a program such as an application program.

In addition, in the following Embodiment, the "Byzantine fault" may be any fault and may include malicious internal attacks such as falsification.

### [First Embodiment]

First, a Byzantine fault tolerance technique and a Byzantine fault detection technique will be described.

The Byzantine fault tolerance technique has been widely studied in a context of State Machine Replication (SMR) in order to shield any fault such as a malicious attack including data falsification. In this specification, the Byzantine fault tolerance technique on the SMR basis is classified as BFT SMR. The BFT SMR duplicates a request from a client among a plurality of replicas in order to allow a fault replica. When it is assumed that the number of allowable fault replicas is f, at least 3f + 1 replicas are needed. In the BFT SMR, in order to acquire the same state among the replicas, a request from the client is usually executed sequentially.

Studies for expanding the BFT SMR for a database system have been also made. In this specification, they are classified as BFT DB. Byzantium is one of BFT DB which applies the Byzantine fault tolerance technique to a database and makes a plurality of transactions ACID and executable in parallel. Since Byzantium uses PBFT for replication, 3f + 1 replicas are needed. Basil broadcasts each transaction to the plurality of replicas and causes it to independently determine and vote to commit or to abort. Then, the client collects the votes and makes final determination on the quorum basis. In order to suppress a transaction with the replica to one-time roundtrip communication made of transmission, execution, result reception of the transaction, Basil needs 5f + 1 replicas.

The Byzantine fault detection technique is a technique handling a Byzantine fault with an approach different from BFT SMR or BFT DB. The Byzantine fault detection technique (BFD) only needs f + 1 replicas when f fault replicas are to be detected, but an operation cannot be continued as a tolerance technique. In PeerReview, which is an initiative of the BFD research, a hash-chained execution log of all the orders is created in a primary node, and it is verified that the states among the replicas are identical by re-executing it sequentially in a secondary node called witness. From a feature similar to SMR, PeerReview is classified as BFD SMR. PeerReview can be also applied to the database system, but there is a problem that the sequential re-execution of a log in the secondary node interferes with parallel execution of the transaction.

A technique disclosed in Patent Literature 1 which detects a Byzantine fault synchronously by using two database replicas held by two components called Ledger and Auditor is known. Here, the word "synchronously" means that, during execution of a transaction, if there is contradiction between the two replicas, it is detected on the spot. On the contrary, Validator according to this Embodiment (hereinafter, simply referred to as "Validator" in the explanation of this Embodiment) improves the performances of transaction throughput and latency by conducting asynchronous Byzantine fault detection as a trade-off of giving-up synchronous Byzantine fault detection by interaction of Ledger and Auditor.

A flow of the synchronous Byzantine fault detection is as follows.
1) Auditor executes sequencing of transaction requests from a client on the basis of presence / absence of conflict (Ordering phase).
2) Ledger executes the transaction in accordance with the determined order and commits it (Commit phase).
3) Auditor verifies the transaction execution result and the execution order of Ledger (Validation phase).

In this 3-phase protocol, if any one of the replicas causes transaction execution violating strict serializability or Byzantine fault such as data falsification, it can be detected on the spot. However, during the transaction execution, Ledger and Auditor should execute synchronous consensus processing (consensus formation) in the Ordering phase and the Validation phase, there is a problem that latency is large.

The Validator has an assumption that a Byzantine fault node could take an arbitrary behavior, and it is assumed that the Byzantine fault could be propagated among nodes of the same management domains (if the management domain is different, a byzantine fault is not propagated or conspired). In addition, the number of required replicas (number of management domains) is 2, but it may be larger than 2.

References of safety (safty) and liveness (liveness) guaranteed by the Validator may be as follows. The safety only needs to be such that the database system guarantees strict serializability, and the following system characteristics may be provided in accordance with the number of fault replicas.
1) When there is no fault replica: When both of the replicas do not fail, the Validator guarantees safety and liveness.
2) When there is one fault replica: When either one of the replicas fails, the Validator guarantees safety. That is, a normal client detects a Byzantine fault which occurred in the database system asynchronously. For example, when the database system executes a transaction in such a schedule that violates the strict serializability, a normal client can detect it recursively afterwards.
3) When there are two fault replicas: When both the replicas fail, the Validator does not guarantee safety or liveness. However, unless the management domains conspire with each other, a possibility that two replicas illegally become the same is extremely low and thus, in many cases, the fault (discordance of a state such as falsification, for example) can be detected by a normal client.

Fig. 22 shows a configuration example of the entire system including the Validator system according to the First Embodiment.

The Validator system is constituted by two components, that is, Validator and Ledger. The former one, Validator, is constituted by the Validator client and the Validator database. The Validator client provides functions for asynchronously performing the Byzantine fault detection such as storing of contents of the transaction request and execution results in the Validator database in addition to the role as the client for an access to the Ledger server. The latter one, Ledger, performs execution of the transaction and commit in accordance with the request from the client.

Validator and Ledger manage their database replicas, respectively, in the management domains, different from each other. In each replica, in addition to the data read / written by the transaction, a definitive program defining logics of the reading / writing is held. The client specifies an identifier of this program and required parameters and requests Ledger to execute the transaction. In addition, each replica may be constituted by a single node or may be constituted by a plurality of nodes in order to improve performances and crash fault tolerance.

A basic idea of an asynchronous Byzantine fault detection protocol in Validator is, instead of determination in advance of an order of transactions for which strict serializability is guaranteed as conventional synchronous protocols, correctness of the transaction committed by Ledger is verified by Validator afterwards. For this after-the-fact validation, a proposal protocol is constituted by a Logging phase and a Validation phase. In the Logging phase, prior to transmission of a transaction request by the Validator client to Ledger, the request contents (program identifier, argument and the like) and a time point are recorded. In addition, when an execution result of the transaction is received from Ledger, the contents and time points thereof are recorded. In the Validation phase, the Validator client re-executes the transaction on the basis of the request contents of the transaction recorded in the Logging phase and verifies whether it is identical with the execution result at the committed by Ledger. Moreover, on the basis of the execution time-point and a reading / writing object, a concurrent and conflicting transaction is specified, and by using MVSG (Multi-Version Serialization Graph), it is verified whether it was Strict Serializable execution. MVSG determines, in addition to a Reads - From relation between transactions, whether the schedule given by confirming that it is a directed graph with an edge related to the version order extended and that there is no circulation in the graph is serializable. Unlike the serializability validation in a black box environment, since it is on the premise that a version order is acquired, the serializability validation can be performed in polynomial time. Specifically, by assuming that V is the number of nodes (the number of transactions, here), and E is the number of edges extended on the basis of a conflicting relation, the serializability validation can be made by O (V + E). Hereinafter, the respective phases will be explained in detail.

Fig. 23 shows the Algorithm 1 (processing flow of Logging phase).

In the Logging phase, first, the client records the transaction request received from the application program together with a time point of acquisition (start time-point) in the Validator database (Line1-2). The transaction request is constituted by <n, f, a, s>, in which n is a unique transaction ID for identifying a request (UUID, for example), f is an identifier of a program (execution logic of a transaction), a is an argument of a program, s is a message authentication code generated from a key shared between the Validator client and Ledger, n, f, and a.

Subsequently, the client transmits a request to Ledger and executes a transaction (Line4). Since the transaction processing in Ledger is similar to the Commit phase of a conventional protocol, details will be omitted, but Ledger reads / writes a record of the database from / to an atomic in accordance with the contents described in the program, and records a state (commit or abort) for each transaction ID. In addition, Ledger creates input / output information at the transaction execution called proof for each of the read / written records together with the execution result of the program and responds to the client. The proof is constituted by <k, v, n, d, s>, in which k is a main key of the record, v is a version number of the record, n is a transaction ID, d is a set of the main key and the version number of the record which was made the input by the transaction, and s is a message authentication code generated from k, v, n, d.

After receiving the execution result and the proof from Ledger, the client records them together with the time point (end time-point) when they were acquired (Line5-6). More specifically, after a Read-Write set of the transaction concerned is created from the proof, it is associated with the transaction request recorded at the start and stored. Here, the Read-Write set is a set of the main key and the version number of the record read / written by the transaction and does not include the value of the record itself. The Read-Write set can be created from k, v, and d of the proof.

Fig. 24 shows Algorithm 2 (processing flow of the Validation phase).

The Validation is executed by the version unit of the record or by the transaction unit. When it is executed by the version unit of the record, the main key key and the version number version are specified so as to acquire the proof, the transaction in which the version is written is specified and then, Validation is executed (Line2-3). In the case of execution by the transaction unit, since the transaction ID is known in advance, the Line3 and after shall be executed as they are.

In the validation processing of the Validation phase, two checks, that is, an input / output check (Line3-6) for verifying whether the input / output of the transaction was correct or not and a serializability check (Line7-9) for verifying whether a set of transactions which are concurrent and conflicting the transaction was executed in accordance with a correct schedule.

At the input / output check, the proof of each record stored in the Validator database is acquired for all the record versions written by the transaction, and the input / output is verified (Line5-6). A main processing of the validation is executed by deriveStates() function. First, a set of input records used for output of the record is acquired (Line11-14). The main key and the version number of the input record are acquired from each proof. In addition, by using the transaction ID acquired similarly from the proof, the program executed in response to the transaction request and the argument thereof are acquired and then, the program is re-executed (Line15-17). When the state obtained as the result of the re-execution, that is, the output record does not match the Ledger side, a validation error is sent out, while when they match each other, it is written in the database of Validator (Line18-21).

A main processing of the serializability check is MVSG creation processing (Line22-36) executed with a createMVSG() function and processing to confirm whether there is circulation in the created MVSG (Line8-9). The MVSG searches a candidate target transaction which is concurrent with the target transaction (Line31), and when those candidate transactions are in a conflicting relation, creation is performed by adding an edge to the candidate transaction from the target transaction (Line32-35). The concurrent candidate transaction is searched on the basis of the start / end time-point recorded in association with each of the transaction requests in the Logging phase. In addition, whether they are in the conflicting relation is determined by using the similarly recorded Read-Write set on the basis of the record read / written by the transaction and the version (Line34). Even when it is not directly in the concurrent and conflicting relation with the validation target transaction to be a start point, since there is a possibility that a transitively related transaction commits serializability violation, the concurrent and conflicting transaction is recursively confirmed and added to the graph (Line36).

It is possible to verify that the transaction execution on the Ledger side is serializable by creating the MVSG as above and by confirming that there is no circulation, but Linearizability violation such as time travel abnormality cannot be detected. Thus, as exemplified in the document, such incorrectness could be done that a transaction is caused to commit with a schedule which does not constitute serializability violation, while an unfairly old version is referred to, for example. By acquiring the time when each version may be read on the basis of the start / end time-point of the transaction recorded on the client side (called visibility time) in advance and by confirming whether the transaction which read a certain version matches the visibility time of the version, the strict serializability can be guaranteed.

Due to various reasons such as client or Ledger failures, network failures and the like, though the transaction request was transmitted, the Logging phase might not normally end without acquiring a response. Here, failure recovery processing of such transaction will be described in brief.

In the failure recovery processing, first, an unstable transaction in which the end time-point is not punched is specified. For each unstable transaction, Ledger is inquired about a state of the transaction. If commit or abort is confirmed as the result of the inquiry, the end time-point is punched with the current time-point. In the case of the commit completion, the Read-Write set is acquired altogether and stored in association with a record of the transaction request. In the case where the state is unclear as the result of the inquiry, since there is a possibility that the transaction is being processed, determination is passed. If it stays unclear even at retry after a certain period of time, similarly to the case of the abort completion, only the end time-point is punched. By performing retry with consideration to time out of the transaction processing (until commit or abort is reached) in Ledger, wrong determination will not be made on the Validator side. Even if the Ledger wrongfully postpones the commit for at least the time out, contradiction can be detected from the record left on the Validator side.

The transaction processing of the Ledger in the asynchronous Byzantine fault detection protocol is similar to the Commit phase of the conventional protocol, and implementation of the conventional Ledger can be used as it is. Therefore, the transaction in the Validator system is executed by a one-shot model using a definitive program called a contract. The Ledger database is abstracted in a multidimensional map Key-Value format and is capable of reading / writing from / to the ACID via the contract.

Ledger abstracts a data access layer in order to realize each function independently of a lower-order database system. As a transaction manager which implements the abstracted data access layer, a high-scalable distributed transaction manager may be employed. The ACID transaction can be realized on various databases including NoSQL not having an ACID transaction function. By using the transaction manager as above, in addition to the ACID database, a database which is not ACID can be used as the Ledger database in accordance with a performance, a cost, and a scalability requirement.

Validator implements the above-described Logging phase and Validation phase. The Validator may be implemented as a library which makes an access to the Ledger. An application may perform key registration for authentication, registration and execution of a contract by using a client SDK for Validator. In addition, an access to the Validator database may be abstracted similarly to Ledger and thus, by using the above-described transaction manager, various databases can be selected as lower-order databases.

One of important information when a proposal protocol asynchronously verifies serializability is a start / end time-point of the transaction acquired in the Logging phase. In Validator, Lamport logical clock (an example of a logical clock) is applied as this start / end time-point.

In this Embodiment, reasons why TrueTime or Timestamp Oracle is not employed as the start / end time-point are as follows. First, a physical time-point such as TrueTime is not used, because an accurate time-point management service as above cannot be necessarily used in all the systems. TrueTime could be provided in a general-purpose NTP server, but an operation thereof is not necessarily easy. In addition, centralized Timestamp Oracle server has a problem that it can be a single point of failure. Even if the operation is performed by a plurality of servers, it is not easy to guarantee a monotonic increase of a time point, while performance scalability is maintained. Thus, in order for a client to punch a time point in a distributed and scalable method, the Lamport logical clock is used.

In Validator, a plurality of clients (a plurality of threads, for example) issue a transaction request. In addition, there is a possibility that the number of the clients is increased / decreased in accordance with a requirement such as required performances. Thus, an approach of mutual transmission / reception of a clock mutually among clients as the algorithm of the Lamprot logical clock is not realistic. Thus, in Validator, this transmission / reception processing is substituted by a reading / writing operation of a clock table on the Validator database shared among the clients.

Specifically, a plurality of counter records corresponding to local counters used by each client are prepared on the clock table. The number of counters to be prepared will be described later. The client scans the clock table at start / end of the transaction and uses a value acquired by adding 1 to a maximum value of the acquired counters as the logical clock at that time-point. In addition, the record of the clock table is also updated to a new value of the logical clock.

It is to be noted that, for a purpose of specifying concurrent transactions without fail, scanning and update of the clock table by each client do not have to be executed as a transaction, and it does not matter even if an old clock is scanned. This is because, if any two transactions are actually concurrent, clock update accompanied by start (or end) of one of them is observed by scanning accompanied by end (or start) of the other without fail, and the start / end time-points overlap each other. An actual start time-point of a transaction T_i is after the clock update of T_i, and the scanning accompanied by the end of a transaction T_j different from that occurs after the commit of T_j and thus, if T_i and T_j are concurrent, the scanning of T_j observes the clock update of T_i without fail. By acquiring an old clock, a time point might be given to a transaction, which is not actually concurrent, as if it were concurrent, but it does not affect a result of serializability check.

Since the scanning and update of the logical clock are relatively heavy processing involving an access to a database, the number of counter records of the clock table and an update frequency thereof are important tuning parameters.

The number of the counter records in the clock table can be reduced by sharing and using them with some client threads. As a result, while the number of records to be scanned is decreased, there is a possibility that updates of the logical clocks conflict with each other and lower the performances.

In addition, it can be so constituted that, when the time point is acquired, only the value of the counter record is scanned such that updates are regularly omitted. In this case, the transactions which look as if they are concurrent would increase. There are two harmful effects in this. One of them is a point that, when a concurrent transaction is extracted in the serializability check, candidate transactions increase. However, without a conflict, the graph itself does not become larger. The other one is that, since the visibility time of the version which can be confirmed afterwards as Validator extends, even when an old version is read illegally on the Ledger side, a possibility that the illegal event would not be found out increases. However, time-point management by Validator and the transaction management of Ledger are executed independently, that is, they are processing executed in different management domains, and it is considered to be difficult for Ledger to make bad use of progress of the logical clock and to cheat at a convenient chance.

In the First Embodiment, the outline of the Validator system capable of asynchronous Byzantine fault detection has been described. The Validator system does not detect a fault by synchronously executing the consensus processing at the transaction execution but detects a Byzantine fault asynchronously by executing the validation processing after the transaction execution. The Validator system improves transaction throughput and latency as compared with the conventional systems.

According to the explanation of the First Embodiment, the following is derived, for example. The following explanation may include supplementary explanation of the First Embodiment or explanation of variations.

A client program which relays a transaction request from an application program to the database server program includes a recording module, an input / output validation module, and a serialization-possibility validation module. The recording module records transaction information. The transaction information is constituted by an identifier of a transaction request, processing contents, arguments, a result of processing of the transaction request by the database server program, an output record, an identifier of an input / output record and a version number, a start time-point of the transaction request, and an end time-point. The input / output validation module receives a validation request including the identifier of the transaction request, re-executes the transaction on the basis of the processing content of the transaction request recorded by the recording module, the arguments, and the input record, and verifies whether the result when the transaction was executed in the database server program and the output record are the same. The serialization-possibility validation module enumerates, on the basis of the start / end time-point of the transaction request, transactions executed in parallel to the transaction, and on the basis of the identifiers and the version numbers of the input / output records of the enumerated transactions, creates a serialization graph indicating a conflicting relation among the transactions, and on the basis of the serialization graph, verifies that the enumerated transactions are capable of serialization.

The serialization-possibility validation module may, on the basis of the version number of the input / output record of the transaction and the start / end time-point, further calculate time in which the record is readable, and on the basis of the readable time, verify that the transaction having been executed in parallel has no contradiction in the light of an actual time order.

The input / output validation module may further identify, when there is no actual record to be an input, the transaction which output the record and have the transaction re-executed recursively.

The start / end time-point may be a logical clock shared by a plurality of client programs.

The recording module may increase / decrease frequencies of acquisition and update of the logical clock on the basis of a transaction request load.

The client program may include a failure recovery module. The failure recovery module searches / acquires a transaction whose end time-point is not recorded, inquire of the database server program the state of those transactions and acquire and / or record insufficient information.

### [Second Embodiment]

A Second Embodiment will be explained. The explanation of the Second Embodiment includes both of common points with and differences from the First Embodiment. In the explanation for the First Embodiment, problem solution in 3-phase protocol was explained, but both the Validator system according to the First Embodiment and the Validator system according to the Second and Third Embodiments can be also applied to a system to which a protocol other than the 3-phase protocol is applied.

Fig. 1 shows a configuration example of an entire system including a Validator system according to the Second Embodiment.

There are one or a plurality of clients 100, a Validator database system 170, and a Ledger system 180. A part of each client 100 and the Validator database system 170 constitute a Validator system 150.

Each client 100 communicates with the Validator database system 170 and the Ledger system 180, respectively. This communication is typically performed via a communication network (not shown). The communication network through which each client 100 and the Validator database system 170 communicate and a communication network through which each client 100 and the Ledger system 180 communicate may be separated physically or logically.

The client 100 executes a plurality of programs. An example of the program to be executed is an application 101 and a Validator program 160.

The application 101 is a computer program of an application such as account management, online shopping and the like. A transaction request is issued from the application 101 to the Ledger system 180 via a client function 161, and a Ledger server 181 of the Ledger system 180 responds to the transaction request and executes the transaction.

The Validator program 160 is a part of the Validator system 150. The Validator program 160 has a client function 161, a transaction log function 162, and a transaction validation function 163. The client function 161 is a function for communicating with the Ledger system 180. The transaction log function 162 and the transaction validation function 163 are functions for communicating with the Validator database system 170. The transaction log function 162 records the transaction log and the proof in a Validator database 172. The transaction validation function 163 verifies whether the transaction was correctly executed in the Ledger system 180.

The Validator database system 170 has a Validator server 171 and the Validator database 172. The Validator server 171 inputs / outputs a transaction log and a proof to / from the Validator database 172. The Validator server 171 may be present at each client 100 or may be in common for a plurality of the clients 100. The Validator database 172 has data as the transaction log and the proof. Specifically, as shown in Fig. 2, for example, the Validator database 172 includes a transaction log table 201V, a record table 202V, and a time-point management table 203.

The Ledger system 180 has a Ledger server 181 and a Ledger database 182. The Ledger server 181 inputs / outputs data to / from the Ledger database 182 in response to a transaction request from the client 100. The Ledger database 182 has data which is input / output in response to a transaction request from the client 100. Specifically, for example, as shown in Fig. 3, the Ledger database 182 includes a transaction log table 201L and a record table 202L.

As a management domain 50, for example, there are a management domain 50A having the client 100, a management domain 50B having the Validator database system 170, and a management domain 50C having the Ledger system 180. It is preferable that the management domain 50C having the Ledger system 180 does not include an element of the Validator system 150. The element in the Validator system 150 in the client 100 may be included in the management domain 50B having the Validator database system 170 instead of the management domain 50A. In the one management domain 50A, all the clients 100 may be included, or by preparing a plurality of the management domains 50A, one or more clients 100 may be included in each of the management domains 50A. The management domain 50B corresponds to a Validator management domain exemplified in Fig. 22, and the management domain 50C corresponds to a Ledger management domain exemplified in Fig. 22.

Each of the clients 100, the Validator database system 170, and the Ledger system 180 may be a physical computer system (one or more physical computers) or may be a logical computer system based on a physical computer system (a virtual machine or a cloud computing service, for example). Each of the Validator server 171 and the Ledger server 181 may be a function realized by execution of the program or may be a physical or logical computer system. An example of the computer system is as shown in Fig. 20. That is, a computer system 2000 has an interface device 2001, a permanent storage apparatus 2002, a memory 2003, and a processor 2004 coupled to them.

The Ledger server 181 manages one or a plurality of contracts (one or a plurality of contracts in the management domain 50C, for example) and executes a specified contract. The "contract" is a processing logic (a computer program, for example) that can be executed in a processing flow of transaction execution. The Ledger server 181 may have a contract management table having information on each of the one or the plurality of contracts. In addition, the Ledger server 181 may have an authentication management table required for the client 100 or the other authentication.

The Validator server 171 also manages one or a plurality of contracts (one or a plurality of contracts in the management domain 50B, for example), which are identical to one or a plurality of contracts that can be executed by the Ledger server 181. The contract, which is identical to the contract executed by the Ledger server 181, can be executed by the Validator server 171 and thus, validation is possible. The Validator server 171 may have a contract management table having information on each of the one or a plurality of contacts. In addition, the Validator server 171 may have an authentication management table required for the client 100 or other authentication.

Hereinafter, the Validator database 172 and the Ledger database 182 will be explained. It is to be noted that, in the following explanation, an "entry" is a line of a table, and a "record" is data having data input / output to / from the Ledger database 182 in the transaction execution. Specifically, the record is data indicating a state of a target (an element specified by a request from the application 101 such as an account, for example) and is a key value pair, for example.

Fig. 4 shows a configuration example of the transaction log table 201V of the Validator database 172.

In the transaction log table 201V, a transaction log is recorded. It is for re-execution of a transaction in the validation. That is, validation is performed by using the recorded transition log.

The transaction log table 201V has an entry for each transaction. The entry has data such as a TxID 401V, a PID 402V, an argument group 403V, a signature 404V, a start time-point 405V, an end time-point 406V, an RW set 407V, an execution result 408V, and a state 409V.

The TxID 401V indicates a transaction ID (UUID, for example). The CID 402V indicates a contract ID. The argument group 403V indicates one or a plurality of arguments of a contract. The signature 404V indicates a signature (signature generated by using the TxID, the CID, and an argument group, for example) for indicating that the transaction request is not falsified.

The start time-point 405V indicates a start time-point of a transaction. The end time-point 406V indicates an end time-point of a transaction. The "time-point" may be a time point expressed in units such as hour, minute, second, year, month, day, but similarly to the First Embodiment, it is a time-point which can be acquired from the time-point management table 203 as a logical clock.

The RW set 407V is a set of records read / written in execution of a transaction and, more specifically, includes a pair of a record ID and a version of the read-out record and a pair of a record ID and a version of a written record in the execution of the transaction. For example, in an entry of TxID 401V"1", "read:x0" means that the record with record ID "x" and the version "0" was read out, and "write:x1" means that the record with the record ID "x" and the version "1" was written. It is to be noted that the record ID corresponds to an ID of a target. A plurality of records with the identical record ID can be present in the Ledger database 182. A pair of the record ID and the version uniquely indicates the record in the record table 202L of the Ledger database 182.

The execution result 408V indicates a value of a predetermined type included in the transaction result which the client 100 (client function 161) received from the Ledger system 180 in the transaction execution. The "value of the predetermined type" may include a state (a latest balance, for example) of a target (an account, for example) after the transaction execution as illustrated, for example, or may include a pair of a record ID and a version in addition thereto.

The state 409V shows a state of a transaction. As the "state of a transaction", for example, there may be a state such as start or end of a transaction in relation to the transaction execution or there may be also a state such as start or end of validation. For example, the transaction validation function 163 can specify to which transaction from the column of the state 409V, the validation has been finished, and validation can be performed by using the RW set 407V and the execution result 408V of the specified transaction.

When the client function 161 receives a request from the application 101, and the transaction execution is started, the data 401V to 405V are recorded by the transaction log function 162. When the client function 161 receives a transaction result in the transaction execution, the data 406V to 407V are recorded by the transaction log function 162.

Fig. 5 shows a configuration example of the record table 202V of the Validator database 172.

The record table 202V is a table corresponding to a replica of the record table 202L of the Ledger database 182. The record table 202V has an entry for each set of the record ID and the version. The entry has data such as a record ID 501V, a version 502V, an input 503V, an output 504V, a TxID 505V, a hash value 506V, a signature 507V, a visibility start time-point 508V, and a visibility end time-point 509V. Attention is paid on one record ("attention-paid record" in the explanation for Fig. 5).

The record ID 501V indicates a record ID (an example of a key) of the attention-paid record. The version 502V of the attention-paid record indicates a version.

The input 503V indicates a record ID and a version of a record read out for writing of an attention-paid record in the transaction execution.

The output 504V is output data (an example of a value) related to the attention-paid record written in the transaction execution and includes a pair of a record ID and a version of the attention-paid record and a state of a target corresponding to the record ID (a balance of an account, for example), for example. The output 504V is blank till before validation and is written in the validation.

The TxID 505V indicates an ID of a transaction in which an attention-paid record was written. From a set of the TxID 505V and the input 503V, a record read out for writing the attention-paid record and a transaction in which the attention-paid record was written can be specified. The TxID 505V and the input 503V are referred to in the validation.

The hash value 506V is a hash value of an output (specifically, the data 501V to 505V) included in the transaction result of the transaction in which the attention-paid record was written. The signature 507V indicates a signature for showing that the hash value 506V has not been falsified. The signature 507V does not have to be stored as long as a response from the Ledger system 180 has been authenticated. In addition, when the proof from the Ledger system 180 includes an output 504L instead of the hash value, there does not have to be the hash value 506V.

The visibility start time-point 508V indicates a start time-point of the visibility time of the attention-paid record. The visibility end time-point 509V indicates an end time-point of the visibility time of the attention-paid record. Here, the "visibility time" of a record is a time zone (a continuous time zone from a visibility start time-point to a visibility end time-point) in which it is logically possible to read the record in the Ledger database 182 in the Ledger system 180. Details including technical meanings of the "visibility start time-point" and the "visibility end time-point" will be described later.

Fig. 6 shows a configuration example of the time-point management table 203 of the Validator database 172.

The time-point management table 203 corresponds to a clock table in the First Embodiment. The time-point management table 203 has an entry for each of the plurality of (or one) counter ID. The entry has data such as an ID 601 and a counter 602.

The ID 601 indicates the counter ID. The counter 602 indicates a counter value as a time point (an integer, for example).

Each of the plurality of (or one) counter ID is allocated to any one of the clients 100 statically or dynamically. For example, the counter ID may be prepared for each client 100, or the counter ID may be allocated to the client 100 on the basis of a rule related to the allocation of the counter ID to the client 100. To each of the clients 100, the counter ID is allocated.

For example, the transaction log function 162 scans the time-point management table 203, specifies a maximum value of the counter value, and records the counter value as (maximum value + 1) in the counter 602 corresponding to the counter ID allocated to the client 10 having the function 162. As a result, a time point as the counter value is updated.

The time point (counter value) specified from the time-point management table 203 is employed for, in addition to each of the visibility start time-point and the visibility end time-point, each of the start time-point and the end time-point of the transaction. A continuous time zone from the start time-point to the end time-point of the transaction can be called "transaction time". A plurality of transactions in which at least a part of the transaction time overlaps with each other is a concurrent transaction. In the validation, it is verified whether the transaction which is concurrent and conflicting is operated serializably.

Fig. 7 shows a configuration example of the transaction log table 201L of the Ledger database 182.

In the transaction log table 201L, a transaction log is recorded as a log of a received transaction request or a state. The transaction log table 201L may have a configuration different from that of the transaction log table 201V of the Validator database 172.

The transaction log table 201L has an entry for each transaction. The entry has data such as TxID 401L, a state 409L, an RW set 407L, and the execution result 408L.

The TxID 401L indicates an ID of a transaction. The state 409L indicates a state of the transaction, whether it was committed or aborted, for example.

The RW set 407L and the execution result 408L correspond to the transaction log recorded in the transaction log table 201L. For example, if the transaction log function 162 could not record a transaction log in the Validator database system 170 due to power interruption or the like, the transaction log is acquired by the client function 161 from the Ledger system 180. The RW set 407L is a set of records read / written in the execution of the transaction and specifically includes a pair of the record ID and the version of the read record and a pair of the record ID and the version of the record written in the execution of the transaction. The execution result 408L indicates a value of a predetermined type included in the transaction result received by the client 100 from the Ledger system 180 in the transaction execution. The "value of a predetermined type" may include a state (the latest balance, for example) of the target (an account, for example) after the transaction execution as shown in the drawing, for example, or may include a pair of the record ID and the version in addition thereto.

Fig. 8 shows a configuration example of the record table 202L of the Ledger database 182.

The record table 202L is a table to / from which data (so-called user data, for example) is input / output in response to a request transmitted from the application 101 via the client function 161. The record table 202L has a record for each set of the record ID and the version. The record has data such as a record ID 501L, a version 502L, an input 503L, and the output 504L. An attention shall be paid to one record ("Attention-paid record" in the explanation for Fig. 8).

The record ID 501L indicates a record ID (an example of a key) of an attention-paid record. The version 502L of the attention-paid record indicates a version.

The input 503L indicates a record ID and a version of a record read out for writing an attention-paid record in the transaction execution. The output 504L is output data (an example of a value) related to the attention-paid record written in the transaction execution and includes a pair of a record ID and a version of the attention-paid record and a state (a balance of an account, for example) of a target corresponding to the record ID, for example.

Hereinafter, an example of processing executed in the Second Embodiment will be explained with reference to Fig. 9 to Fig. 16. Fig. 9 and Fig. 10 correspond to the Logging phase, and Fig. 11 to Fig. 16 correspond to the Validation phase. The Validation phase is asynchronous with the Logging phase.

Fig. 9 and Fig. 10 illustrate an example of a processing flow related to the transaction execution. Specifically, Fig. 9 shows an example of a processing flow related to the Validator program 160 in the processing flows related to the transaction execution. Fig. 10 shows an example of a processing flow related to the Ledger server 181 in the processing flows related to the transaction execution.

This processing flow is started when the client function 161 of the Validator program 160 received a request from the application 101. The request from the application 101 is associated with an ID of a contract to be executed and one or more arguments to be used in the execution of the contract.

As shown in Fig. 9, the client function 161 creates a transaction request which is associated with the contract ID and one or more arguments from the application 101 and can be interpreted by the Ledger system 180 (S901). To the created transaction request, other than the CID (contract ID) and the argument group (one or more arguments), a TxID (transaction ID) and a signature (signature created by using the TxID, CID and the argument group, for example) are associated.

The transaction log function 162 acquires a current time point (a value acquired by adding 1 to the maximum counter 602 in the time-point management table 203, for example) as a start time-point from the time-point management table 203 and writes the current time point as the counter 602 corresponding to the clock ID 601 allocated by the client 100 including the function 162 (S902).

The transaction log function 162 writes the transaction log in the transaction log table 201V of the Validator database 172 (S903). The transaction log written at S903 is data 401V to 405V, that is, data indicating the TxID, the CID, the argument group, and the signature associated with the transaction request created at S901 and the data indicating the start time-point acquired at S902.

The client function 161 transmits the transaction request created at S901 to the Ledger system 180 (S904).

As shown in Fig. 10, the Ledger server 181 of the Ledger system 180 receives a transaction request transmitted at S904 from the client function 161 (S1001).

The Ledger server 181, in response to the transaction request, specifies a contract corresponding to the CID specified in the transaction request from one or a plurality of contracts (one or a plurality of contracts in the management domain 50C) held by the Ledger system 180 and executes the specified contract (S1002). At S1002, reading / writing of a record with respect to the record table 202L of the Ledger database 182 is performed. For example, at S1002, when a record {x0} having a state "4" (record with the record ID of "x" and the version of "0") is read out, and a record {x1} having a state "5" is written in, the record written in the record table 202L is a second record in Fig. 8.

The Ledger server 181 executes commit or abort as a result of the transaction including S1002 (S1003).

The Ledger server 181 creates a proof of transaction execution (S1004). The proof includes a record ID and a version of the written record, an input (the record ID and the version of the record read out for writing the record), a TxID of the transaction, a hash value of the written record, and a signature of the hash value. That is, the proof includes data to be written in the record table 202V of the Validator database 172 as the data 501V to 503V and 505V to 507V. The TxID does not have to be provided. The hash value in the proof is an example of a summary of the output 504L, and the hash value and the signature thereof in the proof correspond to a digest of the output 504L. Instead of the hash value and the signature thereof, the proof may include the output 504L.

The Ledger server 181 creates a transaction result and transmits the transaction result to the Validator program 160 as a response to the transaction request received at S904 (S1005). The transaction result includes the proof created at S1004 and the execution result 408L, which is a result of the execution of the contract at S1002. The proof includes data indicating what kind of transaction was executed in the Ledger system 180 (for example, the input 503L, the hash value of the output 504L, and the signature thereof (or the output 504L)).

As shown in Fig. 9, the client function 161 of the Validator program 160 receives the transaction result transmitted at S1005 (S905).

The transaction log function 162 acquires the current time point from the time-point management table 203 as the end time-point and writes the current time point as the counter 602 corresponding to the clock ID 601 allocated by the client 100 including the function 162 (S906).

The transaction log function 162 writes the transaction log in the transaction log table 201V of the Validator database 172 and writes the proof in the transaction result received at S905 in the record table 202V of the Validator database 172 (S907). The transaction log written at S907 is data 406V to 408V, that is, data indicating the end time-point acquired at S906 and the data indicating the RW set and the execution result (value as a state held by the written record) specified from the transaction result. The proof written at S907 is data 501V to 503V and 505V to 507V.

Fig. 11 shows an example of a processing flow of the validation processing.

This processing flow is started when the validation request with which the record ID and the version are associated (request for validation on whether the record specified from the record ID and the version is really correct) is received by the transaction validation function 163. The validation request may be issued from the application 101, may be issued from a physical or virtual management computer (computer in the management domain 50A, for example), not shown, or may be issued from another validation request source. This processing flow may be started with an unverified target transaction ID specified by the transaction validation function 163 on the basis of the state 409V of the transaction as an input. In this case, the processing may be started at S1102.

The transaction validation function 163 specifies an entry having the record ID 501V and the version 502V matching the record ID and the version associated with the validation request from the record table 202V of the Validator database 172 and acquires the proof (that is, the data 501V to 503V and 505V to 507V in the entry) from the specified entry (S1101).

The transaction validation function 163 acquires a transaction log as the entry having the TxID 401V matching the TxID in the proof acquired at S1101 from the transaction log table 201V of the Validator database 172 (S1102).

The transaction validation function 163 determines whether there is an unprocessed written record in the written records indicated by the RW set 407V of the transaction log acquired at S1102 (S1103). The "unprocessed written record" is a written record to which processing at S1104 and S1105 has not been applied.

When a determination result at S1103 is true (S1103: Yes), the transaction validation function 163 selects the unprocessed written record and acquires a proof of the written record from the record table 202V (S1104). Specifically, from the entry having the record ID 501V and the version 502V matching the record ID and the version of the written record, the proof (data 501V to 503V and 505V to 507V) is acquired. The transaction validation function 163 executes state deriving processing (S1105). At S1105, the transaction validation function 163 re-executes the transaction by using the proof acquired at S1104 and determines whether the same record as the unprocessed written record can be acquired as the result of the re-execution. The state deriving processing corresponds to processing using a deriveStates() function in the First Embodiment. Details of the state deriving processing will be explained later with reference to Fig. 12.

When the determination result at S1103 is false (S1103: No), the transaction validation function 163 executes graph creation processing (S1106). In the graph creation processing, a graph is created. The created graph is a directed graph, a node is a transaction, and an edge and a direction thereof correspond to reading / writing of a record between the transactions. Details of the graph creation processing will be explained later with reference to Fig. 13.

The transaction validation function 163 determines whether or not the graph has a cycle (S1107). When the determination result at S1107 is true (S1107: Yes), the transaction validation function 163 sends out an error to a validation request source (transmission source of the validation request) (S1108). That is because the fact that the graph has a cycle means that the transaction is not executed serializably.

Fig. 12 shows an example of a processing flow of the state deriving processing.

The transaction validation function 163 determines whether the read record indicated by the input 503V of the proof acquired at S1104 has an unprocessed read record (S1201). The "unprocessed read record" is a read record which has not been processed at S1202.

When the determination result at S1201 is true (S1201: Yes), the transaction validation function 163 selects an unprocessed read record, acquires an entry corresponding to the unprocessed read record from the record table 202V (S1201), and adds the contents of the entry (at least data 501V to 507V, for example) to the input list (S1203). It is to be noted that the data to be added to the input list may be only the data 501V, 502V and 504V or may include data other than those data. When the record acquired at S1202 is an unprocessed written record (S1103: Yes), the state deriving processing (S1105) is executed recursively.

When the determination result at S1201 is false (S1201: Yes), the transaction validation function 163 re-executes the transaction by using the input list (S1204) and determines whether or not the hash value of the written record acquired as the result of the re-execution matches the hash value 506V in the proof acquired at S1104 (S1205).

When the determination result at S1205 is true (S1205; Yes), the transaction validation function 163 writes the data including the state acquired as the result of the re-execution as the output 504V of the proof acquired at S1104 (S1206).

When the determination result at S1205 is false (S1205: No), the transaction validation function 163 sends out an error to the validation request source (transmission source of the validation request) (S1207). That is because there is a possibility that some falsification (falsification of a contract of the Ledger system 180 or the record table 202L, for example) might have been committed. It is to be noted that, in a case where S1207 is performed, in addition to the state deriving processing, the validation processing itself may be ended.

Fig. 13 shows an example of a processing flow of the graph creation processing.

The transaction validation function 163 initializes the graph and a ToDo list (S1301). The "graph" created in this graph creation processing is a graph with the TxID held by the transaction log acquired at S1102 as a base point. By means of the initialization of the graph, a blank graph without a node or an edge is prepared. The "ToDo list" is a list of the TxID of the transaction to be checked. The ToDo list is used for checking presence / absence of a concurrent transaction. By the initialization of the ToDo list, only the base point TxID is listed.

The transaction validation function 163 determines whether the ToDo list is empty or not (S1302). Immediately after S1301, since there is the base point TxID, the determination result at S1302 is false.

When the determination result at S1302 is false (S1302: No), the transaction validation function 163 acquires the TxID (the first TxID, for example) from the ToDo list (S1303). The acquired TxID is deleted from the ToDo list.

The transaction validation function 163 determines whether the TxID acquired at S1303 is in the ToDo list (S1304). The TxID acquired at S1303 immediately after S1301 is the base point TxID, and since the graph is blank, a determination result at S1304 is false.

When the determination result at S1304 is false (S1304: No), the transaction validation function 163 executes the visibility confirmation processing. The visibility confirmation processing corresponds to a check of presence / absence of the strict serializability. The visibility confirmation processing may be executed as processing other than the graph creation processing, but it is efficient if it is executed in the graph creation processing. That is because, by means of the transaction log acquisition (S1102 and S1401), a read record group required for the visibility confirmation has been already acquired. That is, the transaction log acquired at S1102 or S1401 may be cached so that it can be efficiently referred to afterwards. Details of the visibility confirmation processing will be explained with reference to Fig. 15 later.

The transaction validation function 163 adds a node corresponding to the TxID acquired at S1303 to the graph (S1306).

The transaction validation function 163 executes conflict confirmation processing (S1307). In the conflict confirmation processing, the TxID mentioned as a check target is added to the ToDo list. For example, assume that Tx2 is mentioned as a transaction which moves concurrently with Tx1 and has a conflict. Since the Tx1 conflicts with the Tx2, a node corresponding to TxID2 is added to the graph. On the other hand, for the Tx2, there is a possibility that a conflicting and concurrent transaction is not limited to the Tx1. Thus, since presence / absence of a transaction conflicting with the Tx2 and concurrent is checked afterward, TxID2 is added to the To list and then, with reference to the TxID2, S1304: No is acquired, and conflict confirmation processing is executed. Details of the conflict confirmation processing will be explained later with reference to Fig. 14. It is to be noted that, though the TxID mentioned in the conflict confirmation processing is added to the ToDo list, the node of the TxID is not immediately added to the graph and thus, there can be a TxID which is in the ToDo list but not in the graph. That is for such a transaction to be found out, since there is a possibility that a concurrent transaction is generated transitively. In addition, as will be described later, though an edge is added at S1307, the added edge is the edge which has been added to the node added at S1306.

When a TxID is acquired from the ToDo list at S1303, and a series of processing ends, the processing returns to S1302. When the determination result at S1302 is true (S1302: Yes), since the graph has been completed, the graph creation processing ends.

Fig. 14 shows an example of a processing flow of the conflict confirmation processing.

The transaction validation function 163 acquires a transaction log (entry) having a TxID acquired at S1303 from the transaction log table 201V of the Validator database 172 (S1401).

The transaction validation function 163 specifies a concurrent transaction group, that is, one or more concurrent transactions (S1402). The "concurrent transaction" referred to here is a transaction whose start time-point or end time-point overlaps the transaction time (time zone from a start time-point to an end time-point) indicated by the transaction log acquired at S1401. The concurrent transaction group can be specified from the transaction log table 201V.

The transaction validation function 163 determines whether there is an unprocessed concurrent transaction (S1403). The "unprocessed concurrent transaction" is a concurrent transaction for which processing at S1404 and after is not executed in the concurrent transaction group specified at S1402. When there is no unprocessed concurrent transaction or when no concurrent transaction is specified at S1402, a determination result at S1403 is false.

When the determination result at S1403 is true (S1403: Yes), the transaction validation function 163 selects an unprocessed concurrent transaction and acquires a concurrent transaction log, which is a transaction log having a TxID matching the TxID of the concurrent transaction from the transaction log table 201V (S1404). It is to be noted that the transaction log of all the concurrent transactions may be acquired at S1402, and in that case, S1404 does not have to be present.

The transaction validation function 163 determines whether the concurrent transaction conflicts with the transaction of the TxID acquired at S1303 (hereinafter, the acquired transaction) (S1405). Specifically, the RW set 407V of the acquired transaction and the RW set 407V of the concurrent transaction are compared with each other. When a record ID of a written record of one transaction of the acquired transaction and the concurrent transaction is a record ID of the read record of the other transaction or when record IDs of the respective written records of the acquired transaction and the concurrent transaction are the same, such a determination result that there is a conflict is acquired. It is to be noted that, when the record IDs of the respective written records of the acquired transaction and the concurrent transaction are the same and the versions are also the same, an error is sent out, and the conflict confirmation processing or validation processing may be ended.

When the determination result at S1405 is false (S1405: No), S1406 and S1407 are skipped, and the processing returns to S1403. That is because, if there is no conflict, it is self-obvious that the acquired transaction and the concurrent transaction have been performed serializably.

When the determination result at S1405 is true (S1405: Yes), the transaction validation function 163 adds an edge with the TxID of the acquired transaction as a start point or an end point to the graph (S1406). For example, when a record written by the concurrent transaction is to be read by the acquired transaction, an edge with a node of the acquired transaction as an end point is added. When a record written by the acquired transaction is to be read by the concurrent transaction, an edge with a node of the acquired transaction as a start point is added. When the acquired transaction and the concurrent transaction write a record of the same record ID, an edge in a direction in accordance with a version, which precedes, is added.

The transaction validation function 163 adds the TxID of the concurrent transaction to the ToDo list (S1407). As described above, that is because a concurrent transaction occurs transitively. At this stage, the node of the concurrent transaction is not added to the graph.

Fig. 15 shows an example of a processing flow of the visibility confirmation processing.

The transaction validation function 163 specifies a read record group (S1501). The "read record group" is one or more read records, and each of the read records is specified from the RW set 407V in the transaction log having the TxID 401V matching the TxID acquired at S1303. In the explanation of Fig. 15 to Fig. 19, the TxID acquired at S1303 is referred to as an "attention-paid TxID" and a transaction corresponding to the attention-paid TxID as "attention-paid transaction".

The transaction validation function 163 determines whether there is an unprocessed read record in the read record group specified at S1501 (S1502). The "unprocessed read record" is a read record to which the processing at S1503 has not been applied.

When the determination result at S1502 is true (S1502: Yes), the transaction validation function 163 selects an unprocessed read record and acquires an entry corresponding to the read record from the record table 202V of the Validator database 172 (S1503). The visibility start time-point 508V and the visibility end time-point 509V in this entry are initialized. It is to be noted that the initialization is performed only when the visibility start time-point 508V and the visibility end time-point 509V of the entry are empty (NULL, for example). The initialized visibility start time-point 508V is the same as the start time-point 405V of the transaction in which the record corresponding to the entry was written. The initialized visibility end time-point 509V is the same as the end time-point 406V of the transaction in which the record was written, when there is a subsequent version of the record corresponding to the entry, while it is a maximum value of integers as a time point in a processing system, when there is no subsequent version. A purpose of the initialization is to set the most conservative visibility time at which the record can be read. Presence / absence of strict serializability can be checked while appropriately reducing the visibility time point gradually by the time of the transaction related to the record.

The transaction validation function 163 determines whether the start time-point 405V of the attention-paid TxID is equal to or smaller than the visibility end time-point 509V of the selected read record (that is, the start time-point 405V is the same as or the past of the visibility end time-point 509V) (S1504). In addition, the transaction validation function 163 determines whether the end time-point 406V of the attention-paid TxID is equal to or larger than the visibility start time-point 508V of the selected read record (that is, whether the end time-point 406V is the same as or the future of the visibility start time-point 508V) (S1505). Either one of S1504 and S1505 may be performed first.

These S1504 and S1505 are determination on whether or not the version of the read record is correct, that is, whether or not it is a version of the record which may be read in the execution of the attention-paid transaction. When there is no overlap between the transaction time of the attention-paid transaction and the visibility time of the read record, that is, when the determination result at S1504 is false (S1504: No) or when the determination result at S1505 is false (S1505: No), it means that a record of a version which should not be read in the attention-paid transaction was read. Thus, the transaction validation function 163 sends out an error to the validation request source (S1507). It is to be noted that, when S1507 is performed, in addition to the visibility confirmation processing, the validation processing itself may be regarded as being ended.

When the determination result at S1504 is true (S1504: Yes) and when the determination result at S1505 is true (S1505: Yes) and the determination result at S1504 is true (S1504: Yes), the transaction validation function 163 executes visibility time update processing (S1506) in order to make the visibility time more appropriate visibility time.

Fig. 16 shows an example of a processing flow of the visibility time update processing.

In the explanation of Fig. 16, the version of the read record corresponding to the entry acquired at S1503 can be referred to as an "attention-paid version", the version one before the attention-paid version as a "previous version", and the version one after the attention-paid version as a "subsequent version". The record IDs of the records of the attention-paid version, the previous version and the subsequent version are the same.

The transaction validation function 163 refers to the record table 202V and determines whether there is a previous version of the attention-paid version (S1601). When the determination result at S1601 is true (S1601: Yes), the transaction validation function 163 determines whether the visibility end time-point 509V of the previous version is larger (future) than the end time-point 406V of the attention-paid transaction (S1602). When the determination result at S1602 is true (S1602: Yes), the transaction validation function 163 updates the visibility end time-point 509V of the previous version to the end time-point 406V of the paid-attention transaction (S1603). That is, the visibility end time-point 509V of the previous version becomes a past time-point, and the visibility time of the previous version becomes shorter.

After S1603, when the determination result at S1601 is false (S1601: No) or the determination result at S1602 is false (S1602: No), the transaction validation function 163 refers to the record table 202V and determines whether there is a subsequent version of the attention-paid version (S1604). When the determination result at S1604 is true (S1604: Yes), the transaction validation function 163 determines whether the visibility start time-point 508V of the subsequent version is smaller (past) than the start time-point 405V of the attention-paid transaction (S1605). When the determination result at S1605 is true (S1605: Yes), the transaction validation function 163 updates the visibility start time-point 508V of the subsequent version to the start time-point 405V of the attention-paid transaction (S1606). That is, the visibility start time-point 508V of the subsequent version becomes a time point in a more future, and the visibility time of the subsequent version becomes shorter.

An example of the visibility time update processing will be explained with reference to Fig. 17 to Fig. 19.

As shown in Fig. 17, it is assumed that there are Tx1 to Tx3 (transaction 1 to transaction 3). An actual order of the transactions is Tx1 → Tx2 → Tx3. Thus, when a record {x1} (record with a record ID "x" and a version "1") has been already written and committed in the execution of Tx1, it is correct that the record {x1} was read in the execution of Tx2, but it is not correct that a record {x0} was read in the execution of Tx3. In this case, such a cause can be considered that a contract in the Ledger system 180 was falsified or the like.

However, in the check of serializability (graph creation processing excluding the visibility confirmation processing), such a result is acquired that the serializability is satisfied in the order of Tx3 → Tx1 → Tx2. That is, the strict serializability is not guaranteed.

Thus, in this Embodiment, the visibility confirmation processing is introduced as check of the strict serializability. Specifically, since an actual behavior in the Ledger system 180 cannot be known accurately from outside the Ledger system 180, the Validator program 160 determines visibility time of the version on the basis of a time point that could be observed from the Validator system 150 for each version of the record and updates the visibility time as appropriate in order to improve accuracy of the visibility time.

A record with a record ID "x" will be taken as an example. According to an actual behavior in the Ledger system 180, the lattermost time point when reading of the record {x0} is allowed is until before a commit time-point of Tx1, and the earliest time point when the reading of the record {x1} is allowed is a commit time-point of Tx1. However, as described above, an actual behavior in the Ledger system 180 is not known from outside the Ledger system 180. Thus, the following time points are employed for the version "0" and the version "1".
- The visibility end time-point 509V of the version "0" is a time point when the Validator program 160 received a transaction result of Tx1, that is, the end time-point 406V of Tx1. This end time-point 406V is the lattermost time-point that the version "0" can take in time-points which are known from outside the Ledger system 180.
- The visibility start time-point 508V of the version "1" is, by assuming that the version "1" is written and committed immediately after the start of Tx1, it is the start time-point 405V of Tx1.

And the visibility end time-point 509V determined as above is updated as follows, for example.

For example, the visibility end time-point 509V of the version "0" is updated as shown in Fig. 18. That is, it is assumed that the attention-paid TxID is "2". The end time-point 406V of Tx2 is more in past than the visibility end time-point 509V of the version "0", which is a previous version of the record {x1} read in the execution of Tx2 (S1602: Yes). Thus, the visibility end time-point 509V of the version "0" is updated to the end time-point 406V of Tx2.

In addition, for example, the visibility start time-point 508V of the version "1" is updated as shown in Fig. 19. That is, it is assumed that the attention-paid TxID is "3". The start time-point 405V of Tx3 is more in future than the visibility start time-point 508V of the version "1", which is a subsequent version of the record {x0} read in the execution of Tx3 (S1605: Yes). Thus, the visibility start time-point 508V of the version "1" is updated to the start time-point 405V of Tx3. It is to be noted that, when the visibility start time-point 508V of the version "1" is updated as above, an error is sent out (S1507) as a result of the serializability check (S1504 and S1505), when the attention-paid TxID is "2". That is because, regarding the version "1", the visibility start time-point 508V is more in future than the start time-point 405V of Tx2, the visibility time of the version "1" does not overlap the transaction time of Tx2 and thus, the determination result at S1504 becomes false. That is, since the order against the actual execution order (Tx3 → Tx1 → Tx2) is detected as inconsistent, the strict serializability is guaranteed.

### [Third Embodiment]

A Third Embodiment will be explained. At that time, differences from the Second Embodiment will be mainly explained, while explanation of common points with the Second Embodiment will be omitted or simplified.

Fig. 21 shows a configuration example of an entire system including the Validator system according to the Third Embodiment.

According to the Third Embodiment, the transaction log function 162 and the transaction validation function 163 are present in the Validator server 171 of the Validator database system 170 instead of the Validator program 160 of the client 100. Either one of the transaction log function 162 and the transaction validation function 163 may be present in the Validator program 160 as in the Second Embodiment. It is to be noted that the Validator server 171 may be present for each of the clients 100. A plurality of the Validator servers 171 may share the Validator database 172. Thus, the plurality of Validator servers 171 may share the time-point management table 203.

As described above, some Embodiments have been explained, but they are exemplifications for explanation of the present invention and are not intended to limit the scope of the present invention only to these Embodiments. The present invention is capable of being executed in the other various forms. For example, at least a part of the First Embodiment may be applied to the Second or the Third Embodiment or a part of the Second or Third Embodiment may be applied to the First Embodiment. In addition, the transaction validation function 163 may receive necessity or not of guarantee of the strict serializability (a user belonging to the management domain 50A or 50B, for example) and determine execution or non-execution of the visibility confirmation processing in accordance with a selection by the user.

It is to be noted that the above-described explanation can be summarized as follows. The following summarization may include supplementary explanation or explanation of a variation.

A validation system (Validator system 150, for example) is constituted. The validation system has a storage part (a recording module or the transaction log function 162, for example) and a validation part (an input / output validation module, a serializability validation module or the transaction validation function 163, for example). A function such as the storage part and the validation part is realized by execution of a computer program by a computer. In addition, this "computer" is a computer outside a first computer system (the Ledger system 180, for example). When the computer as above executes the computer program, the computer is constituted as a validation system outside the first computer system. The management domain of the first computer system and the management domain of the validation system are different. The first computer system may be a first database system.

After the transaction is executed in the first computer system (the Ledger system 180, for example), the validation system verifies the transaction. Specifically, the transaction management data of each transaction executed in the first computer system is stored by the storage part of the validation system in the second computer system (the Validator database system 170, for example). The second computer system may be a second database system. The first computer system is constituted to return a transaction result, when the first computer system executes a transaction in response to a transaction request, and the transaction result includes a proof related to the execution of the transaction. For each transaction, the transaction management data includes data held by the transaction request of the transaction and includes data, which is data acquired from the transaction result of the transaction and having a proof of the transaction. The validation system specifies the transaction management data of the validation target transaction from the second computer system in response to the validation request and performs validation on the basis of the specified transaction management data. As a result, latency is improved, and the transaction throughput is made better. In addition, the validation system outside the first computer system can perform validation in relation to the transaction execution in the first computer system.

The storage part stores the transaction management data for each transaction executed in the first computer system in the second computer system. The first computer system manages an object group set (a record table 202L, for example). The object group set is an object group (a record group, for example) for each target (a bank account, for example). The object group is one or more objects (one or more records, for example) and the object is data indicating a state of a target (a record, for example). When the first computer system executed a transaction in response to a transaction request, which is a request for a transaction of reading and / or writing an object indicating a state of a target, the first computer system is constituted to return a transaction result, which is data related to a result of the transaction. For each transaction, the proof includes a main key (a record ID, for example) and a version of a read object read in the execution of the transaction, a main key and a version of a written object written in the execution of the transaction and a state indicated by the written object or a summary thereof. The proof may include an argument group (one or more arguments) given to a definitive function or an ID of an executed definitive function. For each transaction, the transaction management data includes data held by the transaction request of the transaction and data, which is data acquired from the transaction result of the transaction and has a proof of the transaction. The transaction management data of each of the transactions may be all or some of the entries corresponding to the transaction in the transaction log table 201V or in addition, may include all or some of the entries corresponding to the record in the record table 202V for each of the records read / and written in the execution of the transaction.

It may be so constituted that a transaction request to the first computer system is transmitted from one or a plurality of clients, respectively, and at least either one of the storage part and the validation part may be provided in at least one of one or a plurality of the clients.

The storage part and the validation part may be provided in the second computer system. The set of the storage part and the validation part may be provided in the second computer system for each client.

As validation that can be performed by the validation part, an input / output validation (state deriving processing, for example (S1105)) can be cited. The validation part performs the input / output validation in response to a validation request, for example. In the input / output validation, the validation part specifies the transaction management data of a validation target transaction from the second computer system. The "validation target transaction" may be a transaction specified in a validation request or may be a transaction in which an object specified in a validation request was written. For each written object specified from the transaction management data, the validation part may perform re-execution of the transaction or specifically, the following (1) and (2).
(1) All the read objects having been read for writing of the written object are specified from the transaction management data.
(2) It is determined whether a state or a summary thereof (a hash value, for example) output by executing a definitive function, which is the same as a definitive function (a contract, for example) used in execution of the transaction in the first computer system by using the specified read object matches the state specified from the transaction management data or the summary thereof.

In addition, as validation that can be performed by the validation part, serializability validation (determined (S1107) as graph creation processing (S1106), for example) can be cited. A plurality of transaction requests issued by one or a plurality of clients are transmitted without Ordering (without an Ordering phase of the above-described 3-phase protocol, for example) to the first computer system, and a plurality of transactions are concurrently executed by the first computer system. The input / output validation is possible by using a proof from the first computer system, but serializability cannot be guaranteed.

Thus, the storage part acquires a start time-point and an end time-point of a transaction for each transaction. Since the validation system is outside the first computer system, a time point when a transaction request is transmitted from a client to the first computer system is acquired as a start time-point of the transaction, and a time point when the client received the transaction result is acquired as an end time-point of the transaction. For each transaction, the transaction management data may include data indicating a start time-point and an end time-point of the transaction. For each transaction, a transaction time may be a time from the start time-point to the end time-point of the transaction.

The serializability validation may be performed when, in the input / output validation, each written object of the validation target transaction is matched, for example. In the serializability validation, the validation part may perform the following (1) and (2) for each of one or a plurality of target transactions including the validation target transaction. A first target transaction in the one or plurality of target transactions may be a transaction which is concurrent and conflicting with a second target transaction in the one or plurality of target transactions. For example, each target transaction may be a transaction corresponding to TxID acquired at S1303.
(1) All the concurrent transactions in which at least a part of transaction time overlaps the transaction time of the target transaction are specified.
(2) On the basis of main keys of a read record and a written record specified from the transaction management data of the specified concurrent transaction and main keys of the read record and the written record specified from the transaction management data of the target transaction, in the specified concurrent transactions, a transaction which is concurrent and conflicting with the target transaction is specified.

The validation part may verify whether the plurality of transactions constituting the specified conflicting relation with one or each of a plurality of the target transactions are serializable.

Specifically, the validation part may constitute a directed graph representing a plurality of transactions constituting the conflicting relation. In the directed graph, each node corresponds to a transaction, and each directed edge may be an edge of a direction based on a read record and a written record between the transactions. The validation part may send out an error, when the directed graph has a cycle. When there is no cycle, serializability is guaranteed.

In addition, as validation that can be performed by the validation part, strict serializability validation (visibility confirmation processing (S1305), for example) can be cited. The strict serializability validation may be performed, when guarantee of the strict serializability is specified by a user, for example (that is, when the strict serializability validation as an option was selected). The storage part may store data indicating a visibility start time-point and a visibility end time-point of a visibility time, which is a time in which the object can be read in the second computer system foreach object written in the first computer system. The validation part may perform the strict serializability validation for one or each of a plurality including the validation target transaction. For example, in the serializability validation, the strict serializability validation may be performed for each of the one or plurality of target transactions. In addition, for example, in the input / output validation, when each written object of the validation target transaction was matched, the strict serializability validation may be performed for one or each of a plurality of target transactions. In the strict serializability validation for one or each of a plurality of target transactions, the validation part may send out an error when either one of the following (a) and (b) is not satisfied for at least one of the one or more read objects in the execution of the target transaction.
(a) The start time-point of the target transaction is the same or in the past of the visibility end time-point of the read object.
(b) The end time-point of the target transaction is the same or in the future of the visibility start time-point of the read object.

For each object, the lattermost time-point as the visibility end time-point of the object is a maximum value of a visibility end time-point, when there is no subsequent-version object, which is an object of one version after the version of the object and, when there is the subsequent version object, it may be an end time-point of the transaction in which the object was written. For each object, the earliest time point as the visibility start time-point of the object may be a start time-point of the transaction in which the object was written.

For one or each of a plurality of target transactions, for each of one or more read objects in the execution of the target transaction, when both of (a) and (b) are satisfied in relation to the read object, the validation part may perform the following (1) and (2). That is, the validation part may update the visibility time of the read object to more accurate time.
(1) When there is an object of a previous version, which is an object of one version before the version of the read object and when the visibility end time-point of the object of the previous version is in the more future of the end time-point of the target transaction, the visibility end time-point of the object of the previous version may be updated to the end time-point of the target transaction.
(2) When there is a subsequent version object, which is an object of one version after the version of the read object and the visibility start time-point of the subsequent version object is in the more past of the start time-point of the target transaction, the visibility start time-point of the subsequent version object may be updated to the start time-point of the target transaction.

For each transaction, the storage part may specify the start time-point and the end time-point of the transaction from a logical clock shared by a plurality of the storage parts including this storage part.

The storage part may specify a transaction whose data having a transaction result is not included in the transaction management data. The first computer system may manage a log, which is data including a main key and a version of a read object read in the execution of the transaction, a main key and a version of a written object written in the execution of the transaction, and a state indicated by the written object for each of the executed transactions other than the object group set. An interface part (the client function 161, for example) with respect to the first computer system transmits an inquiry about the specified transaction to the first computer system and receives a log as a response to the inquiry, and the storage part may include the data held by the log in the transaction management data of the transaction. For example, when the storage part could not record some of the transaction management data in the second computer system due to interruption of power or the like, the interface part can acquire the log from the second computer system, and the storage part can store some of the transaction management data which could not be recorded in the second computer system on the basis of the log.

### Reference Signs List

- 160: Validator program
- 161: Client function
- 162: Transaction log function
- 163: Transaction validation function
- 150: Validator system
- 180: Ledger system

## Claims

1. A computer program for causing a computer outside a first computer system to:
store, in a second computer system, transaction management data for each transaction executed in the first computer system;
the first computer system managing an object group set, the object group set being an object group for each target, the object group being one or more objects, and the object being data indicating a state of the target;
the first computer system being configured, when a transaction is executed in response to a transaction request, which is a transaction request for reading and / or writing an object indicating a state of a target, to return a transaction result, which is data related to the transaction result, and the transaction result including a proof related to the execution of the transaction;
for each transaction, the proof including a main key and a version of a read object read in the execution of the transaction and a main key and a version of a written object written in the execution of the transaction, and a state indicated by the written object or a summary thereof;
for each transaction, the transaction management data including data held by a transaction request of the transaction and including data, which is data acquired from the transaction result of the transaction and has a proof of the transaction;
perform input / output validation in response to a validation request; and
in the input / output validation,
specify the transaction management data of a validation target transaction from the second computer system;
for each written object specified from the transaction management data,
specify all the read objects having been read for writing of the written object from the transaction management data; and
determine whether the state or a summary there of output by executing by using a definitive function, which is equal to a definitive function used for execution of the transaction in the first computer system matches the state or a summary thereof specified from the transaction management data.

2. The computer program according to claim 1, wherein the computer is caused to:
for each transaction, acquire a time point when a transaction request of the transaction is transmitted to the first computer system as a start time-point of the transaction, and acquire a time point when a transaction result of the transaction is received as an end time-point of the transaction;
for each transaction, the transaction management data includes data indicating a start time-point and an end time-point of the transaction;
for each transaction, a transaction time is a time from a start time-point to an end time-point of the transaction;
in the input-output validation, when matching of each written object of the validation target transaction is acquired, perform serializability validation;
in the serializability validation,
for one or each of a plurality of target transactions including the validation target transaction,
specify all concurrent transactions in which at least a part of the transaction time overlaps the transaction time of the target transaction;
on the basis of main keys of a read record and a written record specified from the transaction management data of the specified concurrent transaction and main keys of a read record and a written record specified from the transaction management data of the target transaction, specify a transaction which is concurrent and conflicting with the target transaction out of the specified concurrent transactions; and
validate whether the plurality of transactions constituting the specified conflicting relation for the one or each of a plurality of target transactions are serializable.

3. The computer program according to claim 2, wherein
a first target transaction in the one or a plurality of target transactions is a transaction which is concurrent and conflicting with a second target transaction out of the one or a plurality of target transactions.

4. The computer program according to claim 2, wherein the computer is caused to:
constitutes a directed graph indicating the plurality of transactions constituting a conflicting relation;
in the directed graph, each node corresponds to the transaction, and each directed edge is an edge based on a read record and a written record between the transactions; and
when the directed graph has a cycle, sent out an error.

5. The computer program according to claim 2, wherein the computer is caused to:
for each object written in the first computer system, store data indicating a visibility start time-point and a visibility end time-point of a visibility time, which is a time, at which the object can be read, in the second computer system,
in the serializability validation, for each of the one or a plurality of target transactions, execute strict serializability validation; and
for each of the one or a plurality of target transactions, in the strict serializability validation,
for at least one of one or more read objects in execution of the target transaction, when either one of the following (a) and (b) is not satisfied, send out of an error:
(a) a start time-point of the target transaction is equal to or in past of a visibility end time-point of the read object; and
(b) an end time-point of the target transaction is equal to or in future of a visibility start time-point of the read object.

6. The computer program according to claim 5, wherein
for each of objects,
a lattermost time point as a visibility end time-point of the object is, when there is no object of a subsequent version, which is an object of a version one after the version of the object, a maximum value of the visibility end time-point, and when there is an object of the subsequent version, an end time-point of the transaction in which the object is written; and
an earliest time point as the visibility start time-point of the object is a start time-point of the transaction in which the object is written.

7. The computer program according to claim 5, wherein the computer is caused to:
for each of the one or a plurality of target transactions,
for each of one or more read objects in execution of the target transaction, in relation to the read object, when both of the (a) and (b) are satisfied,
when there is a previous version object, which is an object of a version one before the version of the read object, and a visibility end time-point of the previous version object is in future of an end time-point of the target transaction, update the visibility end time-point of the previous version object to an end time-point of the target transaction; and
when there is a subsequent version object, which is an object of a version one after the version of the read object, and a visibility start time-point of the subsequent version object is in past of a start time-point of the target transaction, update the visibility start time-point of the subsequent version object to a start time-point of the target transaction.

8. The computer program according to claim 1, wherein the computer is caused to:
for each object written in the first computer system, store data indicating a visibility start time-point and a visibility end time-point of a visibility time, which is a time, at which the object can be read, in the second computer system;
for one or each of a plurality including the validation target transaction, execute strict serializability validation; and
for each of the one or a plurality of target transactions, in the strict serializability validation,
for at least one of one or more read objects in execution of the target transaction, when either one of following (a) and (b) is not satisfied, send out an error;
(a) a start time-point of the target transaction is equal to or in past of a visibility end time-point of the read object; and
(b) an end time-point of the target transaction is equal to or in future of a visibility start time-point of the read object.

9. The computer program according to claim 1, wherein the computer is caused to:
for each of transactions, specify a start time-point and an end time-point of the transaction from a logical clock shared by the plurality of computer programs including this computer program.

10. The computer program according to claim 1, wherein the computer is caused to:
specify a transaction in which data having the transaction result is not included in the transaction management data;
the first computer system manages, other than the object group set, a log, which is data including a main key and a version of a read object read in execution of the transaction, a main key and a version of a written object written in the execution of the transaction, and a state indicated by the written object, for each of the executed transactions;
transmit an inquiry about the specified transaction to the first computer system; and
receive a log as a response to the inquiry, and include data held by the log in the transaction management data of the transaction.

11. A validation method executed by a computer outside a first computer system, comprising:
storing transaction management data for each transaction executed in the first computer system in a second computer system;
the first computer system managing an object group set, the object group set being an object group for each target, the object group being one or more objects, and the object being data indicating a state of the target;
the first computer system being configured, when a transaction is executed in response to a transaction request, which is a transaction request for reading and / or writing an object indicating a state of a target, to return a transaction result, which is data related to a result of the transaction, and the transaction result including a proof related to the execution of the transaction;
for each transaction, the proof including a main key and a version of a read object read in the execution of the transaction and a main key and a version of a written object written in the execution of the transaction, and a state indicated by the written object or a summary thereof;
for each transaction, the transaction management data including data held by a transaction request of the transaction and data which can be acquired from the transaction result of the transaction and includes a main key and a version of a read object read in execution of the transaction, a main key and a version of a written object written in the execution of the transaction, and a state indicated by the written object or a summary thereof;
executing input / output validation in response to a validation request;
in the input / output validation,
specifying transaction management data of a validation target transaction from the second computer system;
for each written object specified from the transaction management data,
specifying all the read objects having been read for writing of the written object from the transaction management data; and
determining whether a state output by executing a definitive function, which is equal to a definitive function used in the execution of the transaction in the first computer system or a summary thereof matches the state or the summary thereof specified from the transaction management data.

12. A validation system, comprising:
a storage part; and
a validation part, wherein
the storage part stores in a second computer system transaction management data for each transaction executed in a first computer system;
the first computer system manages an object group set, the object group set is an object group for each target, the object group is one or more objects, and the object is data indicating a state of the target;
the first computer system is configured, when a transaction is executed in response to a transaction request, which is a transaction request for reading and / or writing an object indicating a state of a target, to return a transaction result, which is data related to a result of the transaction, and the transaction result includes a proof related to the execution of the transaction;
for each transaction, the proof includes a main key and a version of a read object read in the execution of the transaction and a main key and a version of a written object written in the execution of the transaction, and a state indicated by the written object or a summary thereof;
for each transaction, the transaction management data includes data held by a transaction request of the transaction and includes data acquired from the transaction result of the transaction, a main key and a version of a read object read in the execution of the transaction, a main key and a version of a written object written in the execution of the transaction, and a state indicated by the written object or a summary thereof;
the validation part executes input / output validation in response to a validation request;
in the input / output validation, the validation part
specifies transaction management data of a validation target transaction from the second computer system;
for each written object specified from the transaction management data,
specifies all the read objects having been read for writing of the written object from the transaction management data; and
determines whether a state output by executing a definitive function, which is equal to a definitive function used in the execution of the transaction in the first computer system or a summary thereof matches the state or the summary thereof specified from the transaction management data.

13. The validation system according to claim 12, wherein
each transaction request to the first computer system is transmitted from one or a plurality of clients; and
at least one of the storage part and the validation part is provided in at least one of the one or a plurality of clients.

14. The validation system according to claim 12, wherein
each transaction request to the first computer system is transmitted from one or a plurality of clients; and
the storage part and the validation part are provided in the second computer system.
